(19) Europäisches Patentamt
European Patent Office
Office européen des brevets

(11) EP 3 279 373 B1

(12) EUROPEAN PATENT SPECIFICATION

(45) Date of publication and mention of the grant of the patent:
**06.03.2024 Bulletin 2024/10**

(21) Application number: **16772848.4**

(22) Date of filing: **29.03.2016**

(51) International Patent Classification (IPC):
***D01F 6/70*** (2006.01) ***C08G 18/61*** (2006.01)
***C08G 18/65*** (2006.01) ***D01F 6/78*** (2006.01)
***D01D 5/00*** (2006.01) ***D04H 1/728*** (2012.01)

(52) Cooperative Patent Classification (CPC):
**D01F 6/78; C08G 18/61; C08G 18/65; D01D 5/003; D04H 1/4358; D04H 1/728;** D01F 6/70

(86) International application number:
**PCT/JP2016/060160**

(87) International publication number:
**WO 2016/158967 (06.10.2016 Gazette 2016/40)**

(54) **SILICONE-MODIFIED POLYURETHANE-BASED FIBER AND METHOD FOR MANUFACTURING SAME**

SILIKONMODIFIZIERTE POLYURETHANFASER UND VERFAHREN ZUR HERSTELLUNG DAVON

FIBRE À BASE DE POLYURÉTHANE MODIFIÉ AVEC DE LA SILICONE ET PROCÉDÉ DE FABRICATION DE CETTE FIBRE

(84) Designated Contracting States:
**DE FR GB**

(30) Priority: **31.03.2015 JP 2015072283**

(43) Date of publication of application:
**07.02.2018 Bulletin 2018/06**

(73) Proprietors:
- **Shin-Etsu Chemical Co., Ltd.**
  **Tokyo 100-0004 (JP)**
- **Dainichiseika Color & Chemicals Mfg. Co., Ltd.**
  **Chuo-ku**
  **Tokyo 103-8383 (JP)**
- **National University Corporation Shinshu University**
  **Matsumoto-shi, Nagano 390-8621 (JP)**

(72) Inventors:
- **HATTORI Hatsuhiko**
  **Annaka-shi**
  **Gunma 379-0224 (JP)**
- **YONEDA Yoshinori**
  **Tokyo 100-0004 (JP)**
- **TANAKA Masaki**
  **Tokyo 100-0004 (JP)**
- **KOSHIRO Yoshitaka**
  **Tokyo 103-8383 (JP)**
- **SATO Hiromasa**
  **Tokyo 103-8383 (JP)**
- **IINO Shota**
  **Tokyo 103-8383 (JP)**
- **UMEZU Motoaki**
  **Tokyo 103-8383 (JP)**
- **TANAKA Toshihisa**
  **Ueda-shi**
  **Nagano 386-8567 (JP)**
- **IDE Hiroko**
  **Ueda-shi**
  **Nagano 386-8567 (JP)**
- **OKAMOTO Rino**
  **Ueda-shi**
  **Nagano 386-8567 (JP)**

(74) Representative: **Mewburn Ellis LLP**
**Aurora Building**
**Counterslip**
**Bristol BS1 6BX (GB)**

(56) References cited:
**JP-A- H09 296 045**
**JP-A- S58 217 515**
**JP-A- 2001 207 334**
**JP-A- 2002 517 616**
**JP-A- 2010 084 252**
**JP-A- 2011 102 455**
**JP-A- 2011 157 451**
**JP-A- 2011 173 936**
**US-A1- 2003 209 835**
**US-A1- 2012 277 394**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 279 373 B1

## Description

### TECHNICAL FIELD

The present invention relates to a fiber formed from a resin containing a silicone-modified polyurethane resin, and to a method for producing such a fiber.

### BACKGROUND ART

In general, resin fibers are obtained by processes such as primarily dry spinning and, depending on the kind of fiber, melt spinning, wet spinning, etc.. Electrospinning processes (electrostatic spinning, electrospinning, melt electrospinning) are known as methods for producing fiber structures having a small fiber diameter (see, for example, Patent Documents 1 to 3). "Electrospinning" refers herein to spinning processes that obtain an ultrafine fiber structure and a nonwoven fabric in a one step by applying a high voltage between the nozzle tip on a syringe which holds a polymer-containing solution or a molten polymer and a collector, greatly thinning the polymer by electrostatic forces of repulsion and, at the same time, collecting the polymer. Generally, the fiber structure hardens and forms due to the evaporation of solvent from the polymer solution during the spinning operation. Hardening is also carried out by cooling (e.g., where chemicals are liquid at elevated temperature), chemical curing (e.g., treatment with a hardening vapor), and solvent evaporation (e.g., where chemicals are liquid at room temperature). The nonwoven fabric produced is collected on a suitably placed substrate and may also, if necessary, be peeled off.
Polyurethane resin nanofibers have hitherto been reported (Patent Documents 4 and 5), but these have low slip properties and flexibility, poor anti-blocking properties and, depending on the application, inadequate water repellency. Nanofibers made from silicone resins (Patent Document 6) and silsesquioxanes (Patent Document 7) have also been reported. However, fibers made of such silicone resins three-dimensionally crosslinked to a high density are lacking flexibility and have a poor processability.
Silicone-modified polyurethanes are known, e.g. from US2012/277394A, JP2011/157451A, JP201/173936, US6,637,181B, JP2001/207334 where they are disclosed for making films and elastic fibers in general terms, e.g. for clothing, using e.g. extrusion molding and injection molding. US2003/209835 describes a medical device (stent) made by spinning fibers onto a metal frame to form a tube. Fluoropolymers are preferred; numerous alternative materials are listed including polyurethanes which may be siliconized.

### PRIOR ART DOCUMENTS

### PATENT DOCUMENTS

Patent Document 1: JP-A 2008-223186
Patent Document 2: JP-A 2010-189771
Patent Document 3: JP-A 2014-111850
Patent Document 4: U.S. Pat. No. 4,043,331
Patent Document 5: JP-A 2006-501373
Patent Document 6: JP-A 2011-503387
Patent Document 7: JP-A 2014-025157


### SUMMARY OF THE INVENTION

### PROBLEMS TO BE SOLVED BY THE INVENTION

An object of this invention is to provide a fiber having the excellent characteristics with excellent flexibility, slip properties, anti-blocking properties, heat-retaining properties, water vapor permeability, water repellency and spinnability. A further object of the invention is to provide a method for producing such a fiber.

### MEANS FOR SOLVING THE PROBLEMS

The inventors have conducted extensive investigations, as a result of which they have discovered that the following silicone-modified polyurethane fiber and method of production thereof are able to achieve the above objects.
That is, the present invention provides the following fiber and method of production thereof.

A first aspect is a fiber as defined in claim 1, formed from a resin which contains a silicone-modified polyurethane resin. The silicone-modified polyurethane resin is a reaction product of (A) a polyol, (B) a chain extender, (C) an active hydrogen group-containing organopolysiloxane and (D) a polyisocyanate, and contains from 0.1 to 50 parts by weight of the active hydrogen group-containing organopolysiloxane (C) per 100 parts by weight of components (A) to (D) combined. The active hydrogen group-containing organopolysiloxane (C) is an organopolysiloxane of general formula (1) below

$$R^1SiR^2R^3O(SiR^2R^3O)_nSiR^2R^3R^1 \qquad (1),$$

wherein each $R^1$ is independently a monovalent hydrocarbon group of 1 to 10 carbon atoms which has a hydroxyl group or a mercapto group and may have on the chain an oxygen atom or a monovalent hydrocarbon group of 1 to 10 carbon atoms which has a primary amino group or a secondary amino group; $R^2$ and $R^3$ are each independently a group selected from among linear, branched or cyclic alkyl or aralkyl groups of 1 to 10 carbon atoms in which some portion of the hydrogen atoms may be substituted with fluorine atoms, aryl groups of 5 to 12 carbon atoms which may have a substituent, and vinyl groups; and n is an integer from 1 to 200. The fiber has a diameter of at least 100 nm and less than 1,000 nm.
The silicone-modified polyurethane resin may have a number-average molecular weight of from 10,000 to 200,000.
A second aspect as specified in claim 9 is a fibrous layered structure comprising fibers as defined above.
A third aspect as specified in claim 11 is a method for producing a fiber as defined above, comprising the step of spinning a silicone-modified polyurethane resin-containing resin solution or dispersion by an electrospinning process.
The silicone-modified polyurethane resin may be fed to the spinning step in the state of a solution or dispersion in an organic solvent, water or a mixture thereof.

## ADVANTAGEOUS EFFECTS OF THE INVENTION

This invention provides a fiber having the excellent characteristics with excellent flexibility, slip properties, anti-blocking properties, heat-retaining properties, water vapor permeability, water repellency and spinnability.

## BRIEF DESCRIPTION OF THE DIAGRAMS

FIG. 1 is a schematic diagram showing an example of an apparatus that uses an electrospinning process (electrostatic spinning) to produce a nonwoven fabric by discharging a polymer solution into an electrostatic field.
FIG. 2 is a scanning electron micrograph (magnification, 2,000×) of the surface of the nonwoven fabric obtained in Working Example 1.
FIG. 3 is a scanning electron micrograph (magnification, 2,000×) of the surface of the nonwoven fabric obtained in Working Example 3.
FIG. 4 is a scanning electron micrograph (magnification, 2,000×) of the surface of the nonwoven fabric obtained in Working Example 6.
FIG. 5 is a scanning electron micrograph (magnification, 2,000×) of the surface of the nonwoven fabric obtained in Working Example 7.
FIG. 6 is a scanning electron micrograph (magnification, 2,000×) of the surface of the nonwoven fabric obtained in Comparative Example 1.

## EMBODIMENTS FOR CARRYING OUT THE INVENTION

The invention is described more concretely below.
The fiber of the invention is a fiber formed from a resin which contains a silicone-modified polyurethane resin.
The silicone-modified polyurethane resin is a reaction product of (A) a polyol, (B) a chain extender, (C) an active hydrogen group-containing organopolysiloxane and (D) a polyisocyanate, and contains from 0.1 to 50 parts by weight, preferably from 0.1 to 40 parts by weight, and more preferably from 1 to 30 parts by weight, of the active hydrogen group-containing organopolysiloxane (C) per 100 parts by weight of components (A) to (D) combined.
In this invention, "reaction product" is not limited to reaction products of components (A) to (D) alone, and may refer also to reaction products obtained from a reaction system which, in addition to components (A) to (D), includes also other components, such as (E) a polyamine.
In this invention, the silicone-modified polyurethane resin may be prepared by using a known polyurethane synthesis process. Specifically, the silicone-modified polyurethane resin is obtained by the reaction of (A) a polyol, (B)

a chain extender, (C) an active hydrogen group-containing organopolysiloxane and (D) a polyisocyanate.

The polyol (A) is a polymeric polyol having a number-average molecular weight of at least 500, preferably from 500 to 10,000, and more preferably from 700 to 3,000; use can be made of any such polymeric polyol that is not an active hydrogen group-containing organopolysiloxane (C). Exemplary polymeric polyols include those belonging to the groups (i) to (vi) shown below. In this invention, the number-average molecular weight is a polymethyl methacrylate equivalent value obtained by gel permeation chromatography.

(i) Polyether polyols, such as those obtained by polymerizing or copolymerizing an alkylene oxide (e.g., ethylene oxide, propylene oxide, butylene oxide) and/or a heterocyclic ether (e.g., tetrahydrofuran), specific examples of which include polyethylene glycol, polypropylene glycol, polyethylene glycol-polytetramethylene glycol (as a block or random copolymer), polytetramethylene ether glycol and polyhexamethylene glycol.

(ii) Polyester polyols, such as condensation polymers of an aliphatic dicarboxylic acid (e.g., succinic acid, adipic acid, sebacic acid, glutaric acid, azelaic acid) and/or an aromatic dicarboxylic acid (e.g., isophthalic acid, terephthalic acid) with a low-molecular-weight glycol (e.g., ethylene glycol, 1,2-propylene glycol, 1,3-propylene glycol, 1,4-butylene glycol, 1,6-hexamethylene glycol, neopentyl glycol, 1,4-bishydroxymethylcyclohexane), specific examples of which include polyethylene adipate diol, polybutylene adipate diol, polyhexamethylene adipate diol, polyneopentyl adipate diol, polyethylene/butylene adipate diol, polyneopentyl/hexyl adipate diol, poly-3-methylpentane adipate diol and polybutylene isophthalate diol.

(iii) Polylactone polyols, such as polycaprolactone diol or triol, and poly-3-methylvalerolactone diol.

(iv) Polycarbonate polyols, specific examples of which include polytrimethylene carbonate diol, polytetramethylene carbonate diol, polypentamethylene carbonate diol, polyneopentyl carbonate diol, polyhexamethylene carbonate diol, poly(1,4-cyclohexanedimethylene carbonate) diol, polydecamethylene carbonate diol and random/block copolymers of these.

(v) Polyolefin polyols, such as polybutadiene glycol, polyisoprene glycol, and hydrogenated products thereof.

(vi) Polymethacrylate polyols, specific examples of which include $\alpha,\omega$-polymethyl methacrylate diol and $\alpha,\omega$-polybutyl methacrylate diol.

Of these, polyether polyols are preferred, and polyethylene glycol, polypropylene glycol and polytetramethylene ether glycol are more preferred.

The chain extender (B) is a short-chain polyol having a number-average molecular weight of less than 500, preferably at least 60 and less than 500, and more preferably from 75 to 300. Specific examples include aliphatic glycols such as ethylene glycol, 1,2-propanediol, 1,3-propanediol, 1,4-butanediol, 1,3-butanediol, 1,6-hexamethylene glycol and neopentyl glycol, and low-mole alkylene oxide adducts thereof (number-average molecular weight, less than 500); alicyclic glycols such 1,4-bishydroxymethylcyclohexane and 2-methyl-1,1-cyclohexanedimethanol, and low-mole alkylene oxide adducts thereof (number-average molecular weight, less than 500); aromatic glycols such as xylylene glycol, and low-mole alkylene oxide adducts thereof (number-average molecular weight, less than 500); bisphenols such as bisphenol A, thiobisphenol, and sulfonebisphenol, and low-mole alkylene oxide adducts thereof (number-average molecular weight, less than 500); alkyl dialkanolamines such as Ci-is alkyl diethanolamines; and polyhydric alcohol compounds such as glycerol, trimethylolethane, trimethylolpropane, pentaerythritol, tris(2-hydroxyethyl) isocyanurate, 1,1,1-trimethylolethane and 1,1,1-trimethylolpropane. Of these, aliphatic glycols are more preferred, and ethylene glycol, 1,3-propanediol and 1,4-butanediol are even more preferred.

The amount of chain extender (B) used per 100 parts by weight of the polyol (A) is preferably from 1 to 200 parts by weight, and more preferably from 10 to 30 parts by weight.

The active hydrogen group-containing organopolysiloxane (C) is an organopolysiloxane of formula (1).

$$R^1SiR^2R^3O(SiR^2R^3O)_nSiR^2R^3R^1 \qquad (1)$$

Here, each $R^1$ is independently a monovalent hydrocarbon group of 1 to 10 carbon atoms which has a hydroxyl group or a mercapto group and may have on the chain an oxygen atom, or a monovalent hydrocarbon group of 1 to 10 carbon atoms which has a primary amino group or a secondary amino group.

Examples of the monovalent hydrocarbon group of 1 to 10 carbon atoms which has a hydroxyl group or a mercapto group and may have on the chain an oxygen atom include hydroxymethyl, 2-hydroxyeth-1-yl, 2-hydroxyprop-1-yl, 3-hydroxyprop-1-yl, 2-hydroxybut-1-yl, 3-hydroxybut-1-yl, 4-hydroxybut-1-yl, 2-hydroxyphenyl, 3-hydroxyphenyl, 4-hydroxyphenyl, 2-(hydroxymethoxy)eth-1-yl, 2-(2-hydroxyethoxy)eth-1-yl, 2-(2-hydroxypropoxy)eth-1-yl, 2-(3-hydroxypropoxy)eth-1-yl, 2-(2-hydroxybutoxy)eth-1-yl, 2-(3-hydroxybutoxy)eth-1-yl, 2-(4-hydroxybutoxy)eth-1-yl, 3-(hydroxymethoxy)prop-1-yl, 3-(2-hydroxyethoxy)prop-1-yl, 3-(2-hydroxypropoxy)prop-1-yl, 3-(3-hydroxypropoxy)prop-1-yl, 3-(2-hydroxybutoxy)prop-1-yl, 3-(3-hydroxybutoxy)prop-1-yl, 3-(4-hydroxybutoxy)prop-1-yl, mercaptomethyl, 2-mercaptoeth-1-yl, 2-mercaptoprop-1-yl, 3-mercaptoprop-1-yl, 2-mercaptobut-1-yl, 3-mercatpbut-1-yl, 4-mercaptobut-1-yl,

2-(mercaptomethoxy)eth-1-yl, 2-(2-mercaptoethoxy)eth-1-yl, 2-(2-mercaptopropoxy)eth-1-yl, 2-(3-mercaptopropoxy)eth-1-yl, 2-(2-mercaptobutoxy)eth-1-yl, 2-(3-mercaptobutoxy)eth-1-yl, 2-(4-mercaptobutoxy)eth-1-yl, 3-(mercaptomethoxy)prop-1-yl, 3-(2-mercaptoethoxy)prop-1-yl, 3-(2-mercaptopropoxy)prop-1-yl, 3-(3-mercaptopropoxy)prop-1-yl, 3-(2-mercaptobutoxy)prop-1-yl, 3-(3-mercaptobutoxy)prop-1-yl and 3-(4-mercaptobutoxy)prop-1-yl groups.

Examples of the monovalent hydrocarbon group of 1 to 10 carbon atoms which has a primary amino group or a secondary amino group include aminomethyl, 2-aminoeth-1-yl, 2-aminoprop-1-yl, 3-aminoprop-1-yl, 2-aminobut-1-yl, 3-aminobut-1-yl, 4-aminobut-1-yl, N-methylaminomethyl, N-methyl-2-aminoeth-1-yl, N-methyl-2-aminoprop-1-yl, N-methyl-3-aminoprop-1-yl, N-methyl-2-aminobut-1-yl, N-methyl-3-aminobut-1-yl, N-methyl-4-aminobut-1-yl, N-ethylaminomethyl, N-ethyl-2-aminoeth-1-yl, N-ethyl-2-aminoprop-1-yl, N-ethyl-3-aminoprop-1-yl, N-ethyl-2-aminobut-1-yl, N-ethyl-3-aminobut-1-yl, N-ethyl-4-aminobut-1-yl, N-butylaminomethyl, N-butyl-2-aminoeth-1-yl, N-butyl-2-aminoprop-1-yl, N-butyl-3-aminoprop-1-yl, N-butyl-2-aminobut-1-yl, N-butyl-3-aminobut-1-yl and N-butyl-4-aminobut-1-yl groups.

Of these $R^1$ groups, monovalent hydrocarbon groups of 2 to 6 carbon atoms which have a primary hydroxyl group or a secondary hydroxyl group and may have on the chain an oxygen atom, and monovalent hydrocarbon groups which have a primary amino group or a secondary amino group are preferred; 2-hydroxyeth-1-yl, 3-hydroxyprop-1-yl, 3-(2-hydroxyethoxy)prop-1-yl and 3-aminoprop-1-yl groups are more preferred.

$R^2$ and $R^3$ in formula (1) are each independently a group selected from among linear, branched or cyclic alkyl or aralkyl groups of 1 to 10 carbon atoms in which some portion of the hydrogen atoms may be substituted with fluorine atoms, aryl groups of 5 to 12 carbon atoms which may have a substituent, and vinyl groups.

Examples of linear, branched or cyclic alkyl or aralkyl groups of 1 to 10 carbon atoms include methyl, ethyl, propyl, isopropyl, n-butyl, cyclohexyl, 2-ethylhex-1-yl, 2-phenyleth-1-yl and 2-methyl-2-phenyleth-1-yl groups.

Examples of linear, branched or cyclic alkyl groups of 1 to 10 carbon atoms in which some portion of the hydrogen atoms is substituted with fluorine atoms include 3,3,3-trifluoropropyl, 3,3,4,4,4-pentafluorobutyl, 3,3,4,4,5,5,6,6,6-nonafluorohexyl, 3,3,4,4,5,5,6,6,7,7,7-undecafluoroheptyl, 3,3,4,4,5,5,6,6,7,7,8,8,8-tridecafluorooctyl, 3,3,4,4,5,5,6,6,7,7,8,8,9,9,9-pentadecafluorononyl and 3,3,4,4,5,5,6,6,7,7,8,8,9,9,10,10,10-heptadecafluorodecyl groups.

Examples of aryl groups of 5 to 12 carbon atoms which may have substituents include phenyl, 2-methyl-1-phenyl, 3-methyl-1-phenyl, 4-methyl-1-phenyl, 2,3-dimethyl-1-phenyl, 3,4-dimethyl-1-phenyl, 2,3,4-trimethyl-1-phenyl, 2,4,6-trimethyl-1-phenyl and naphthyl groups.

Of these $R^2$ and $R^3$ groups, groups selected from among methyl, phenyl, 3,3,3-trifluoropropyl and vinyl groups are preferred.

In formula (1), n is an integer from 1 to 200, and preferably an integer from 5 to 50.

Such active hydrogen group-containing organopolysiloxanes may be synthesized in accordance with their respective required substituents, although commercial products may also be used. Examples include Compounds (1-1) to (1-11), (2-1) to (2-11), (3-1) to (3-11) and (4-1) to (4-11) below. In the following formulas, "Me" stands for a methyl group and "Ph" stands for a phenyl group.

[Chemical Formula 1]

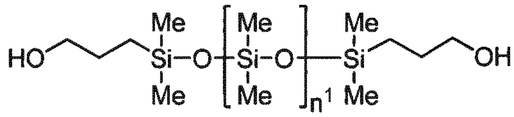
(1-1)

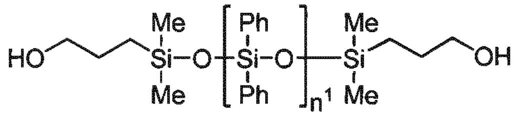
(1-2)

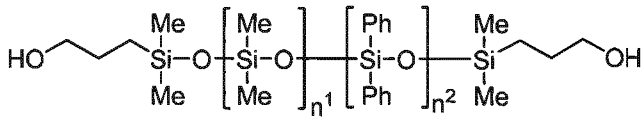
(1-3)

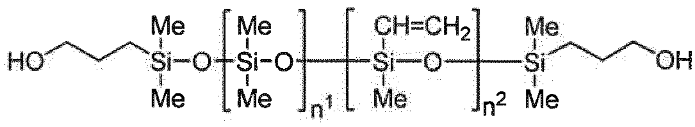
(1-4)

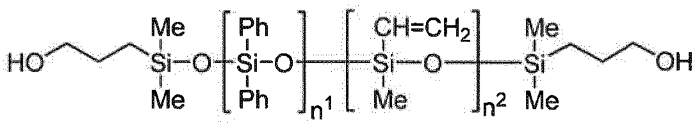
(1-5)

[Chemical Formula 2]

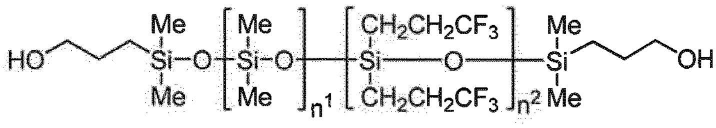

(1-6)

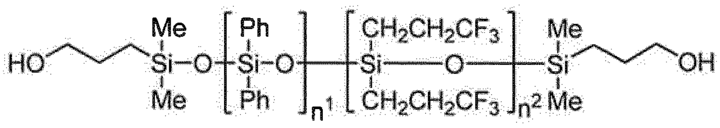

(1-7)

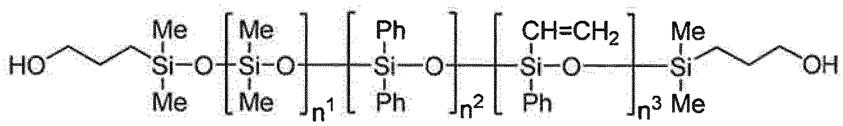

(1-8)

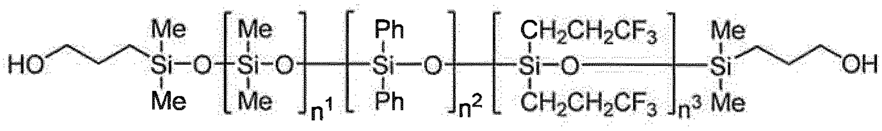

(1-9)

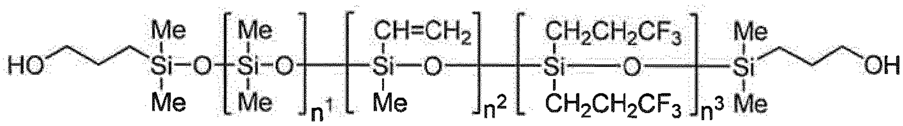

(1-10)

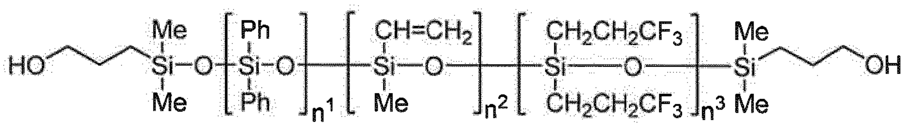

(1-11)

[Chemical Formula 3]

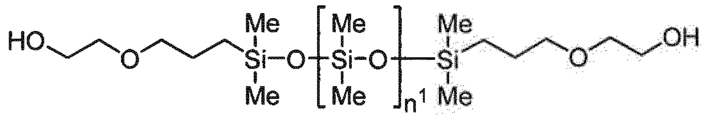

(2-1)

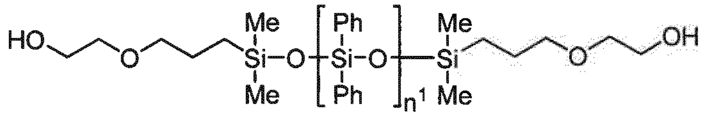

(2-2)

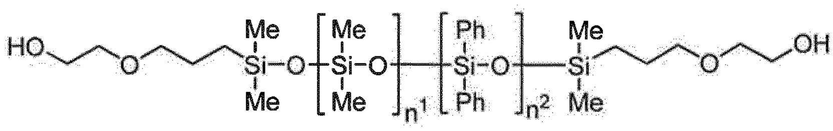

(2-3)

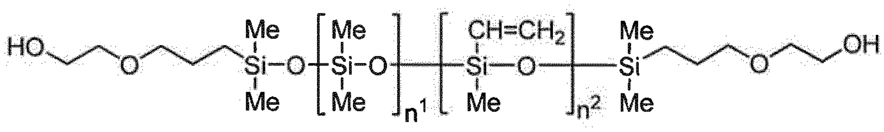

(2-4)

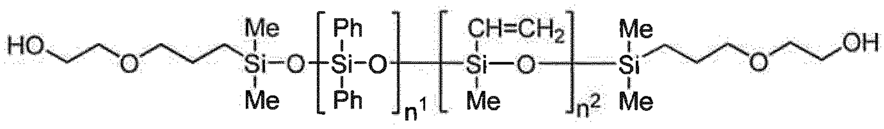

(2-5)

[Chemical Formula 4]

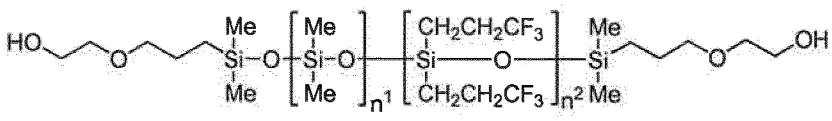

(2-6)

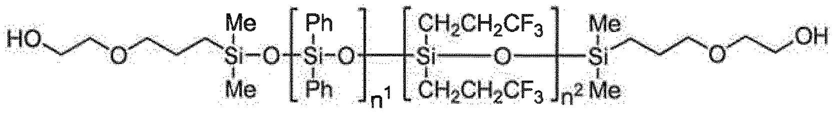

(2-7)

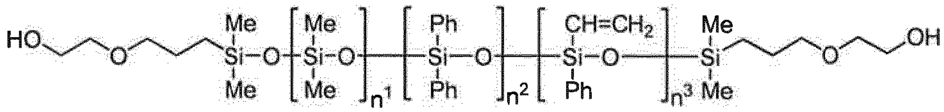

(2-8)

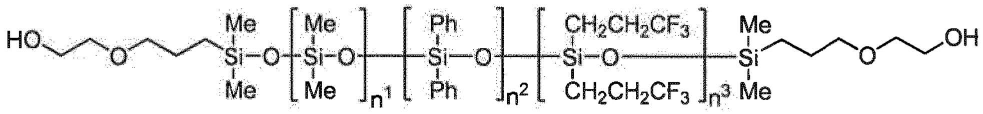

(2-9)

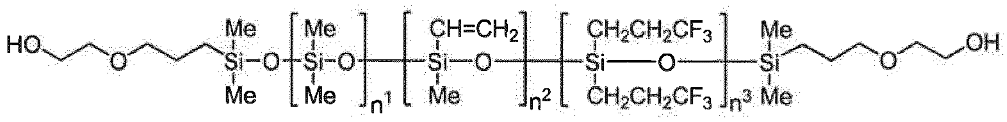

(2-10)

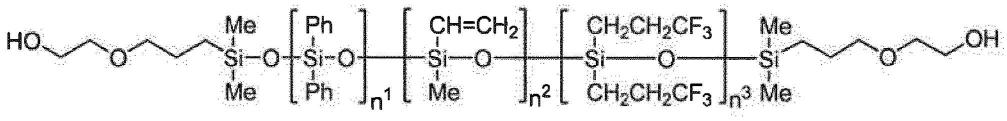

(2-11)

[Chemical Formula 5]

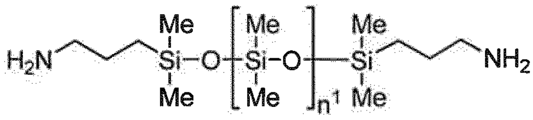

(3-1)

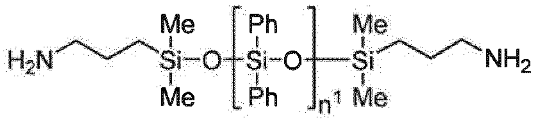

(3-2)

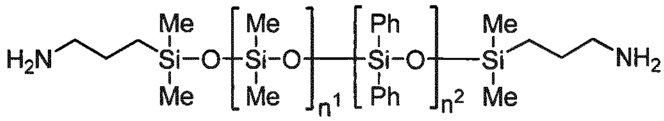

(3-3)

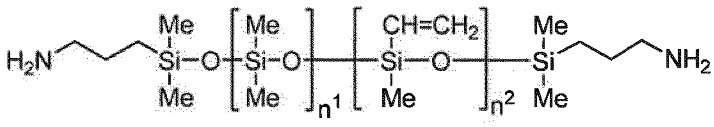

(3-4)

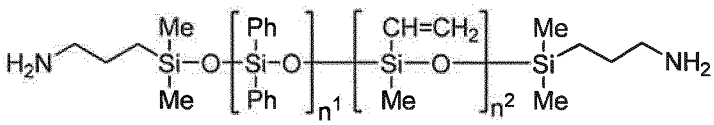

(3-5)

[Chemical Formula 6]

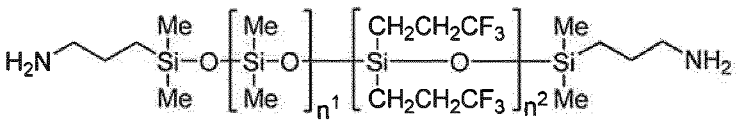
(3-6)

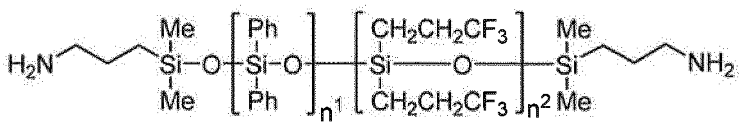
(3-7)

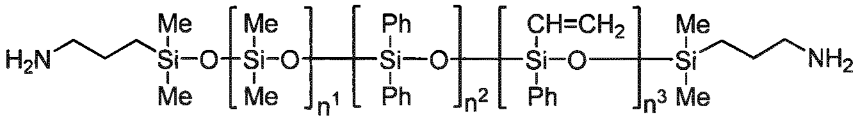
(3-8)

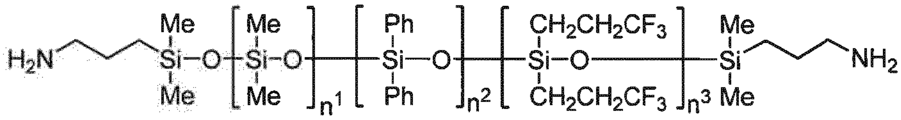
(3-9)

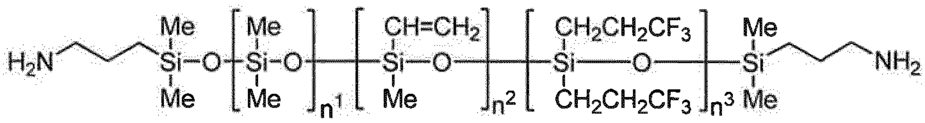
(3-10)

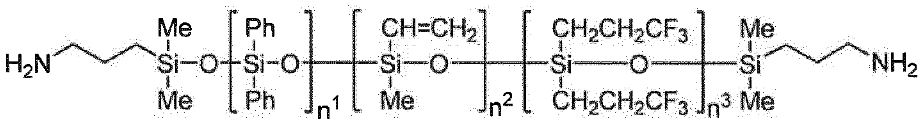
(3-11)

[Chemical Formula 7]

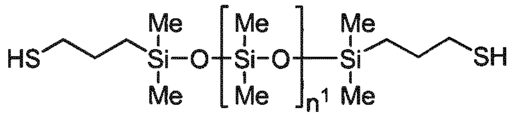

(4-1)

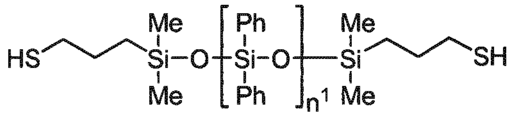

(4-2)

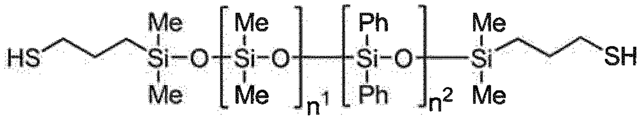

(4-3)

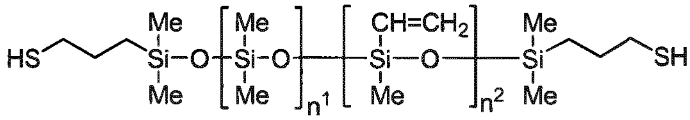

(4-4)

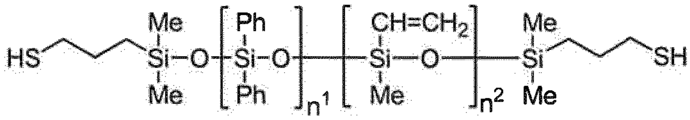

(4-5)

[Chemical Formula 8]

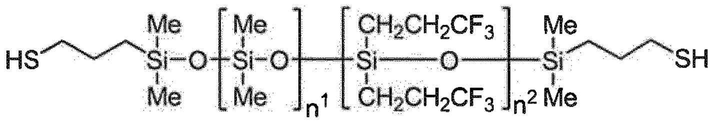
(4-6)

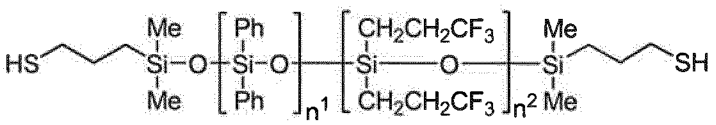
(4-7)

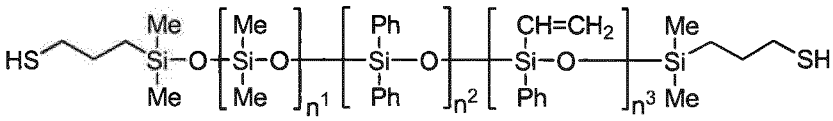
(4-8)

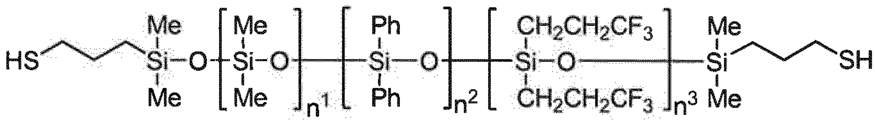
(4-9)

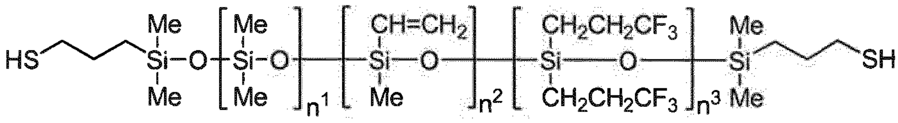
(4-10)

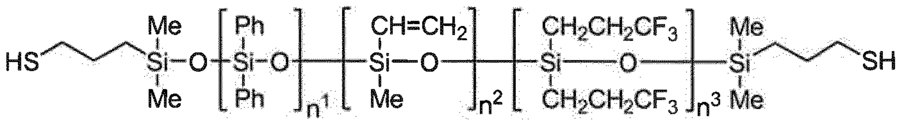
(4-11)

In above compounds (1-1), (1-2), (2-1), (2-2), (3-1), (3-2), (4-1) and (4-2), n = $n^1$ and $n^1$ is 1 or more. In above compounds (1-3) to (1-7), (2-3) to (2-7), (3-3) to (3-7) and (4-3) to (4-7), $n^1+n^2$ = n, $n^1$ is 1 or more, and $n^2$ is 1 or more. In above compounds (1-8) to (1-11), (2-8) to (2-11), (3-8) to (3-11) and (4-8) to (4-11), $n^1+n^2+n^3$ = n and $n^1$, $n^2$ and $n^3$ are each 1 or more. The arrangement of the repeating units may be as blocks or may be random.

Such compounds may be synthesized by, for example, reacting an active hydrogen group-containing disiloxane with a cyclic siloxane having any substituent under acidic or alkaline conditions.

The amount of active hydrogen group-containing organopolysiloxane (C) used is as mentioned above.

Any hitherto known polyisocyanate may be used as the polyisocyanate (D). Preferred examples include aromatic diisocyanates such as toluene-2,4-diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanatodiphenyl ether, 4,4'-methylenebis(phenylene isocyanate) (MDI), durylene diisocyanate, tolidine diisocyanate, xylylene diisocyanate, (XDI), 1,5-naphthalene diisocyanate, benzidine diisocyanate, o-nitrobenzidine diisocyanate, and 4,4'-diisocyanatodibenzyl; aliphatic diisocyanates such as methylene diisocyanate, 1,4-tetramethylene diisocyanate, 1,6-hexamethylene diisocyanate and 1,10-decamethylene diisocyanate; alicyclic diisocyanates such as 1,4-cyclohexylene diisocyanate, 1,5-tetrahydronaphthalene diisocyanate, isophorone diisocyanate, 4,4'-methylene bis(cyclohexyl isocyanate) (H12MDI) and hydrogenated XDI; and polyurethane prepolymers obtained by reacting these diisocyanate compounds with a low-molecular-weight polyol or polyamine such that the ends become isocyanate groups.

The amount of polyisocyanate (D) used is set such that the equivalent weight ratio of isocyanate groups with respect to active hydrogen groups from above components (A) to (C) is preferably in the range of 0.9 to 1.1, more preferably in the range of 0.95 to 1.05, and even more preferably in the range of 0.99 to 1.01.

A polyamine (E) may be added in synthesis of the silicone-modified polyurethane resin of the invention. The polyamine (E) is exemplified by short-chain diamines, aliphatic diamines, aromatic diamines, long-chain diamines and hydrazines; use may be made of any that is not an active hydrogen group-containing organopolysiloxane (C). Examples

of short-chain diamines include aliphatic diamine compounds such as ethylenediamine, trimethylenediamine, hexamethylenediamine, trimethylhexamethylenediamine and octamethylenediamine; aromatic diamine compounds such as phenylenediamine, 3,3'-dichloro-4,4'-diaminodiphenylmethane, 4,4'-methylenebis(phenylamine), 4,4'-diaminodiphenyl ether and 4,4'-diaminodiphenyl sulfone; and alicyclic diamine compounds such as cyclopentanediamine, cyclohexyldiamine, 4,4-diaminodicyclohexylmethane, 1,4-diaminocyclohexane and isophoronediamine. Long-chain diamines are exemplified by those obtained from polymers or copolymers of alkylene oxides (ethylene oxide, propylene oxide, butylene oxide, etc.), with specific examples including polyoxyethylene diamine and polyoxypropylene diamine. Hydrazines are exemplified by hydrazine, carbodihydrazide, adipic acid dihydrazide, sebacic acid dihydrazide and phthalic acid dihydrazide. Alternatively, by using an amino-modified silane coupling agent, the design of self-curing reaction-type coatings becomes possible. Examples include N-2-(aminoethyl)-3-aminopropylmethyl dimethoxysilane (KBM-602, from Shin-Etsu Chemical Co., Ltd.), N-2-(aminoethyl)-3-aminopropylmethyltrimethoxysilane (KBM-603, from Shin-Etsu Chemical Co., Ltd.), N-2-(aminoethyl)-3-aminopropylmethyldiethoxysilane (KBE-602, from Shin-Etsu Chemical Co., Ltd.), 3-aminopropyltrimethoxysilane (KBE-603, from Shin-Etsu Chemical Co., Ltd.), 3-aminopropyltriethoxysilane (KBE-903, from Shin-Etsu Chemical Co., Ltd.), and 3-ureidopropyltriethoxysilane.

The amount of polyamine (E) used is set to preferably from 1 to 30 parts by weight, and more preferably from 1 to 15 parts by weight, per 100 parts by weight of the combined amount of above components (A) to (D).

Where necessary, a catalyst may be used in synthesis of the silicone-modified polyurethane resin of the invention. Examples include metal salts of organic and inorganic acids and organometallic derivatives, such as dibutyltin dilaurate, dibutyltin maleate, dibutyltin phthalate, dibutyltin dioctanoate, dibutyltin bis(2-ethyl hexanoate), dibutyltin bis(methyl maleate), dibutyltin bis(ethyl maleate), dibutyltin bis(butyl maleate), dibutyltin bis(octyl maleate), dibutyltin bis(tridecyl maleate), dibutyltin bis(benzyl maleate), dibutyltin diacetate, dibutyltin bis(isooctyl thioglycolate), dibutyltin bis(2-ethylhexyl thioglycolate), dioctyltin bis(ethyl maleate), dioctyltin bis(octyl maleate), dibutyltin dimethoxide, dibutyltin bis(nonyl phenoxide), dibutenyltin oxide, dibutyltin oxide, dibutyltin bis(acetyl acetonate), dibutyltin bis(ethyl acetoacetonate), the reaction products of dibutyltin oxide with silicate compounds, the reaction products of dibutyltin oxide with phthalic acid esters, lead octanoate, tetrabutyl titanate, tetrapropyl titanate, tetraisopropyl titanate, titanium tetrakis(acetyl acetonate), titanium diisopropoxybis(acetyl acetonate), titanium diisopropoxybis(ethyl acetate) and complexes obtained by, for example, reacting the diol of tartaric acid with titanium chloride; and tertiary organic base catalysts such as trimethylamine, triethylamine ($Et_3N$), diisopropylethylamine (DIPEA), tri-n-butylamine, tri-n-pentylamine, tri-n-hexylamine, tri-n-heptylamine, tri-n-octylamine, N-methylpyrrolidine, N-methylpiperidine, N-methylmorpholine (NMO), N,N,N',N'-tetramethylethylenediamine (TMEDA), N-methylimidazole (NMI), pyridine, 2,6-lutidine, 1,3,5-collidine, N,N-dimethylaminopyridine (DMAP), pyrazine, quinoline, 1,8-diazabicyclo-[5,4,0]-7-undecene (DBU) and 1,4-diazabicyclo-[2,2,2]octane (DABCO).

The amount of catalyst used is the catalytic amount, which is preferably from 0.01 to 10 mol%, and more preferably from 0.1 to 5 mol%, based on the total amount of above components (A) to (E).

The silicone-modified polyurethane resin of the invention may be synthesized in the absence of a solvent or, if necessary, may be synthesized using an organic solvent. Solvents that are preferred as the organic solvent include those which are either inert to isocyanate groups or have a lower activity than the reaction components. Examples include ketone-type solvents (acetone, methyl ethyl ketone, methyl isobutyl ketone, cyclohexanone, menthone, etc.), aromatic hydrocarbon solvents (toluene, o-xylene, m-xylene, p-xylene, 1,3,5-mesitylene, 1,2,3-mesitylene, 1,2,4-mesitylene, ethylbenzene, n-propylbenzene, i-propylbenzene, n-butylbenzene, i-butylbenzene, sec-butylbenzene, t-butylbenzene, n-pentylbenzene, i-pentylbenzene, sec-pentylbenzene, t-pentylbenzene, n-hexylbenzene, i-hexylbenzene, sec-hexylbenzene, t-hexylbenzene, Swasol (aromatic hydrocarbon solvents from Cosmo Oil Co., Ltd.), Solvesso (aromatic hydrocarbon solvents from Exxon Chemical), etc.), aliphatic hydrocarbon solvents (pentane, hexane, heptane, octane, nonane, cyclopentane, cyclohexane, cycloheptane, cyclooctane, methylcyclohexane, ethylcyclohexane, propylcyclohexane, n-butylcyclohexane, i-butylcyclohexane, sec-butylcyclohexane, t-butylcyclohexane, n-pentylcyclohexane, i-pentylcyclohexane, sec-pentylcyclohexane, t-pentylcyclohexane-n-hexylcyclohexane, i-hexylcyclohexane, sec-hexylcyclohexane, t-hexylcyclohexane, limonene), alcohol-type solvents (methyl alcohol, ethyl alcohol, isopropyl alcohol, s-butyl alcohol, iso-butyl alcohol, t-butyl alcohol, etc.), ether-type solvents (diethyl ether, t-butyl methyl ether (TBME), dibutyl ether, cyclopentyl methyl ether (CPME), diphenyl ether, dimethoxymethane (DMM), tetrahydrofuran (THF), 2-methyltetrahydrofuran, 2-ethyltetrahydrofuran, tetrahydropyran (THP), dioxane, trioxane, 1,2-dimethoxyethane, diethylene glycol dimethyl ether, diethylene glycol diethyl ether, etc.), ester-type solvents (ethyl acetate, butyl acetate, isobutyl acetate, etc.), glycol ether ester-type solvents (ethylene glycol ethyl ether acetate, propylene glycol methyl ether acetate, 3-methyl-3-methoxybutyl acetate, ethyl-3-ethoxypropionate, etc.), amide-type solvents (dimethylformamide (DMF), dimethylacetamide (DMAc), N-methyl-2-pyrrolidone (NMP), 1,3-dimethyl-2-imidazolidinone (DMI), 1,3-dimethyl-3,4,5,6-tetrahydro-2-(1H)-pyrimidinone (DMPU), etc.), and nitrile-type solvents (acetonitrile, propionitrile, butyronitrile, benzonitrile, etc.). Of these, taking into account solvent recovery, solvency at the time of urethane synthesis, reactivity, boiling point and emulsifying dispersibility in water, preferred solvents include DMF, methyl ethyl ketone, ethyl acetate, acetone and tetrahydrofuran.

In the silicone-modified polyurethane resin synthesizing step of the invention, when isocyanate groups remain at the polymer ends, in addition, a stopping reaction may be carried out at the isocyanate ends. For example, compounds having a single functionality, such as monoalcohols and monoamines, and also compounds with two types of functionality having differing reactivities to isocyanate, may be used. Illustrative examples include monoalcohols such as methyl alcohol, ethyl alcohol, n-propyl alcohol, isopropyl alcohol, n-butyl alcohol, isobutyl alcohol and t-butyl alcohol; monoamines such as monoethylamine, n-propylamine, diethylamine, di-n-propylamine and di-n-butylamine; and alkanolamines such as monoethanolamine and diethanolamine. Of these, alkanolamines are preferred in terms of the ease of reaction control.

The number-average molecular weight of the silicone-modified polyurethane resin is preferably from 10,000 to 200,000. At a number-average molecular weight for the silicone-modified polyurethane resin within this range, the polymer chains within the polymer solution fully entangle with each other, facilitating fiber formation. A number-average molecular weight within this range is preferable also in terms of manifesting a viscosity suitable for spinning the polymer solution by an electrospinning process. The number-average molecular weight is most preferably from 40,000 to 120,000. The number-average molecular weight is a polymethyl methacrylate equivalent value obtained by gel permeation chromatography.

In this invention, various types of additives such as inorganic or organic fillers may be included for the purpose of improving various properties of the resulting fibers. When additives are to be included, adding given amounts of these beforehand to the reaction system when preparing the silicone-modified polyurethane resin is desirable for obtaining a nonwoven fabric in which fillers and other additives are uniformly dispersed.

The resin composition may also have other resins admixed therein, provided that this does not detract from the advantageous effects of the invention. In addition, to the extent that doing so does not detract from the advantageous effects of the invention, desired properties may be imparted by the addition of additives such as nucleating agents, carbon black, pigments (e.g., inorganic calcined pigments), antioxidants, stabilizers, plasticizers, lubricants, parting agents and flame retardants.

The fiber according to the invention is formed from a resin containing this silicone-modified polyurethane resin. Although the resin is preferably formed solely of this silicone-modified polyurethane resin, one, two or more resins, such as vinyl resins, acrylic resins, methacrylic resins, epoxy resins, urethane resins, olefin resins or silicone resins, may be used together in an amount of preferably from 0 to 50 wt%, and more preferably from 0 to 20 wt%.

In this invention, "layered structure of fiber" refers to a three-dimensional structure formed by weaving, knitting or some other technique, wherein the single filament or plurality of filaments obtained are arranged as successive layers. The layered structure of fiber may take the form of, for example, a nonwoven fabric, tubing, or mesh.

Nonwoven fabrics herein have an elastic modulus of preferably from 1 to 20 MPa, and more preferably from 2 to 10 MPa; a dynamic coefficient of friction at the surface of preferably from 0.5 to 2.0, and more preferably from 0.5 to 1.0; a thermal conductivity of preferably from 0.001 to 0.02 W/mK, and more preferably from 0.01 to 0.02 W/mK; a water contact angle of preferably at least 100° (water-repelling), and more preferably from 120 to 160°; a moisture content of preferably not more than 150 %, and more preferably from 50 to 120 %; and an elongation at break of preferably at least 80 %, and more preferably at least 100 %.

The fiber made of a silicone-modified polyurethane resin is preferably produced via the following three steps. The first step is the step of producing a silicone-modified polyurethane resin, the second step is the step of using an organic solvent, water or a mixture thereof to prepare a solution or dispersion containing the silicone-modified polyurethane resin, and the third step is the step of spinning the silicone-modified polyurethane resin solution or dispersion.

The first step of producing a silicone-modified polyurethane resin may be carried out by, for example, reacting, as a one-shot process or a multi-stage process, (A) a polyol, (B) a chain extender, (C) an active hydrogen group-containing organopolysiloxane and (D) a polyisocyanate in a formulation such that the equivalent weight ratio between isocyanate groups and active hydrogen groups is generally from 0.9 to 1.1, either in the presence of an organic solvent without active hydrogen groups in the molecule or in the absence of a solvent, and generally at between 20 and 150°C, preferably between 50 and 110°C; emulsifying the resin thus formed with water and a neutralizing agent; and subsequently, if necessary, passing through a desolvation step to obtain the silicone-modified polyurethane resin of the invention (or an emulsified form thereof in water).

The second step is the step of using an organic solvent, water or a mixture thereof to prepare a solution or dispersion of a resin containing the above silicone-modified polyurethane resin. The solution or dispersion has a solids concentration of preferably from 10 to 50 wt%. At a solids concentration below 10 wt%, fiber formation is difficult; the resin tends to form instead into particles or beads, which is undesirable. At a concentration greater than 50 wt%, the diameter of the resulting fiber becomes large and the viscosity of the spinning dope becomes high, which is undesirable because poor delivery and nozzle blockage tend to arise. The solids concentration is more preferably from 20 to 40 wt%.

The solvent used in the second step is not particularly limited, provided it is a substance which has a boiling point at one atmosphere of not more than 300°C, is a liquid at 25°C, and dissolves the silicone-modified polyurethane resin and any optionally added resins. For example, it is possible to employ the solvent used during polymerization of the silicone-modified polyurethane resin, in which case the silicone-modified polyurethane resin solution obtained by

polymerization may be used directly as is. Examples of other solvents include mixed solvents of one or more type selected from among organic solvents typified by dimethylformamide and methyl ethyl ketone (ether-type compounds, alcohol-type compounds, ketone-type compounds, amide-type compounds, nitrile-type compounds, aliphatic hydrocarbons, aromatic hydrocarbons), and water.

Examples of ether-type compounds include diethyl ether, t-butyl methyl ether (TBME), dibutyl ether, cyclopentyl methyl ether (CPME), diphenyl ether, dimethoxymethane (DMM), tetrahydrofuran (THF), 2-methyltetrahydrofuran, 2-ethyltetrahydrofuran, tetrahydropyran (THP), dioxane, trioxane, 1,2-dimethoxyethane, diethylene glycol dimethyl ether and diethylene glycol diethyl ether; THF is especially preferred. Examples of alcohol-type compounds include methanol, ethanol, 1-propanol, 2-propanol, n-butyl alcohol, i-butyl alcohol, s-butyl alcohol, t-butyl alcohol, ethylene glycol, 2-methoxyethanol, 2-(2-methoxyethoxy)ethanol, 1,2-propanediol, 1,3-propanediol, 1,3-butanediol, 1,4-butanediol, 2,3-butanediol, 1,5-pentanediol, 2-butene-1,4-diol, 2-methyl-2,4-pentanediol, glycerol, 2-ethyl-2-mercaptomethyl-1,3-propanediol, 1,2,6-hexanetriol, cyclopentanol, cyclohexanol and phenol; methanol, ethanol and ethylene glycol are especially preferred. Examples of ketone-type compounds include methyl ethyl ketone, methyl isobutyl ketone, cyclopentanone, cyclohexanone, acetone and limonene; methyl ethyl ketone is especially preferred. Examples of amide-type compounds include dimethylformamide (DMF), diethylformamide, dimethylacetamide (DMAc), N-methylpyrrolidone (NMP), N-ethylpyrrolidone, 1,3-dimethyl-2-imidazolidinone (DMI) and 1,3-dimethyl-3,4,5,6-tetrahydro-2-(1H)-pyrimidinone (DMPU); dimethylformamide is especially preferred. Examples of nitrile-type compounds include acetonitrile, propionitrile, butyronitrile and benzonitrile; acetonitrile and propionitrile are especially preferred. Examples of aliphatic and aromatic hydrocarbons include toluene, o-xylene, m-xylene, p-xylene, 1,3,5-mesitylene, 1,2,3-mesitylene, 1,2,4-mesitylene, ethylbenzene, n-propylbenzene, i-propylbenzene, n-butylbenzene, i-butylbenzene, sec-butylbenzene, t-butylbenzene, n-pentylbenzene, i-pentylbenzene, sec-pentylbenzene, t-pentylbenzene, n-hexylbenzene, i-hexylbenzene, sec-hexylbenzene, t-hexylbenzene, cyclopentane, cyclohexane, cycloheptane, cyclooctane, methylcyclohexane, ethylcyclohexane, propylcyclohexane, n-butylcyclohexane, i-butylcyclohexane, sec-butylcyclohexane, t-butylcyclohexane, n-pentylcyclohexane, i-pentylcyclohexane, sec-pentylcyclohexane, t-pentylcyclohexane, n-hexylcyclohexane, i-hexylcyclohexane, sec-hexylcyclohexane, t-hexylcyclohexane, limonene and $\alpha,\alpha,\alpha$-trifluoromethylbenzene.

In mixed solvents, the combination of an ether-type compound with water, an ether-type compound with an alcohol-type compound, a ketone-type compound with water, or an amide-type compound with a ketone-type compound is preferred. A mixed solvent of an amide-type compound with a ketone-type compound is more preferred. As for the mixing proportions, when a low-boiling ketone-type compound is used, the rate of evaporation rises, making spinning difficult. Hence, when an amide-type compound and a ketone-type compound are used together, the mixing proportions are more preferably from 50:50 to 80:20 (by weight).

The viscosity of the solution or dispersion of the silicone-modified polyurethane resin-containing resin is preferably in the range of 1 to 1,500 dPa·s. The viscosity is more preferably from 200 to 800 dPa·s. The viscosity here is the viscosity at 25°C as measured with a rotational viscometer.

The third step is the step of spinning the silicone-modified polyurethane resin solution or dispersion. The spinning method is not particularly limited, although an electrospinning method (electrostatic spinning, electrospinning, melt electrospinning) is preferred.

In electrospinning, a nonwoven fabric can be obtained by discharging a polymer solution into an electrostatic field formed by applying a high voltage between a nozzle and a collector, and depositing the fiber that forms on the collector. Here, "nonwoven fabric" is not limited only to the state where solvent has already evaporated and been removed; it denotes also the solvent-containing state.

A spinning apparatus for the electrospinning method which may be advantageously used in the invention is described. The electrodes that are used may be ones made of any metal, inorganic material or organic material that exhibits electrical conductivity. Alternatively, the electrodes may be composed of an insulating material having thereon a thin film of a metal, inorganic material or organic material that exhibits electrical conductivity. The electrostatic field is formed by applying a high voltage between the nozzle and the target, and may be one formed between a pair of electrodes or a larger number of electrodes. This includes, for example, cases in which a total of three electrodes are used, e.g., two electrodes of differing voltages (e.g., 15 kV and 10 kV) plus an electrode connected to ground, and includes also cases in which an even larger number of electrodes are used.

The solvent used when producing fiber by the electrospinning method may be a single solvent used alone or may be a plurality of solvents used in combination. Methods for regulating the rate of solvent evaporation include methods that involve adjusting the nozzle shape, methods that involve the use of a mixed solvent, and methods that involve adjusting the temperature or humidity of the spinning environment. Such methods may be suitably combined and used together. Of these, methods that involve the use of a mixed solvent are simple and effective.

Any method may be used to discharge the prepared polymer solution from the nozzle and into the electrostatic field. For example, in FIG. 1, the polymer solution 2 is fed to a stationary polymer solution tank equipped with a nozzle 1, and is then fiberized by being ejected from the nozzle of the polymer solution tank into the electrostatic field. A suitable apparatus may be used for this purpose. For example, a hypodermic syringe needle-shaped nozzle 1 to which a voltage

has been applied by a suitable means such as a high-voltage generator 5 may be mounted onto the tip of the polymer solution-holding portion of a tubular syringe 3 at a suitable distance from a collector 4 having a grounded electrode. When the polymer solution 2 is ejected from the tip of the nozzle 1, a fiber can be formed between the tip of the nozzle 1 and the collector 4.

Known methods may be used as other methods for introducing a polymer solution into an electrostatic field. For example, an electrode that is paired with a fibrous structure-collecting electrode may be inserted directly into a polymer solution-containing syringe that has a nozzle. Because syringes often have a small capacity, a tank may be used instead of a syringe and the polymer solution may be spun from a nozzle at the bottom of the tank by applying pressure from the top of the tank or, conversely, may be spun from a nozzle at the top of the tank by applying pressure from the bottom of the tank. At this time, it is also possible to place the electrode in close proximity to the discharge opening in the nozzle rather than attaching it directly to the nozzle, and to deposit the spun fiber onto the collector by means of an air assist mechanism (JP-A 2010-121221). Other spinning methods which do not use a nozzle have been described in the art, including electrostatic spinning methods which use a rotating roll. One such example is a method in which a rotating roll is dipped in a bath filled with a polymer solution, causing the polymer solution to adhere to the roll surface, and electrostatic spinning is carried out by applying a high voltage to this surface.

In cases where the polymer solution is fed into an electrostatic field from a nozzle, it is possible to increase the rate of production for the fibrous structure by providing a plurality of nozzles (JP-A 2007-303031) or air-assist blowers (JP-A 2014-47440). Moreover, in order to improve quality, a method for increasing the orientation of nanofibers by placing an electrode body between the nozzle and the collector and applying a given electrical potential has been described (JP-A 2008-223186). It is also possible to achieve a uniform fiber diameter and increase the processing speed by providing air-assist blowers on a plurality of nozzles and using nozzles with controlled internozzle positions (JP-A 2014-177728), or by using gear pumps when feeding the mixed solution to a plurality of nozzles (JP-A 2010-189771). The interelectrode distance depends on, for example, the voltage, the nozzle dimensions (diameter), and the flow rate and concentration of the spinning dope. However, in part to suppress corona discharge, when the applied voltage is 10 to 20 kV, a distance of from 5 to 30 cm is appropriate. Another way to suppress corona discharge is to carry out spinning in a vacuum.

The value of the applied voltage is not particularly limited, although it is preferable for the applied voltage to be from 3 to 100 kV. An applied voltage below 3 kV is undesirable because the coulombic repulsion becomes small and fiber formation tends to be difficult. On the other hand, an applied voltage above 100 kV is undesirable because sparks are sometimes generated between the electrodes, making spinning impossible to carry out. The applied voltage is more preferably from 5 to 30 kV.

The dimensions of the nozzle from which the polymer solution is ejected are not particularly limited. However, taking into account the balance between productivity and the diameter of the resulting fiber, the nozzle diameter is preferably from 0.05 to 2 mm, and more preferably from 0.1 to 1 mm.

The feed rate (or extrusion rate) of the polymer solution is not particularly limited. However, because the feed rate exerts an influence on the target fiber diameter, it is preferably set to a suitable value. When the feed rate is too high, due to such effects as inadequate solvent evaporation and insufficient coulombic repulsion, the desired fibers may not be obtainable. When the feed rate is too low, the fiber productivity decreases, which is undesirable. The feed rate of the polymer solution is preferably from 0.01 to 0.1 mL/min per nozzle.

Cases in which an electrode serves also as the collector have been described above, although it is also possible to collect the fibers on a collector situated between the electrodes. In this case, continuous production is possible by providing, for example, a belt-like collector between the electrodes.

When the polymer solution is deposited onto the collector, the solvent evaporates, forming a fibrous structure. Generally, at room temperature, the solvent evaporates in the interval up until the solution lands on the collector. However, in cases where solvent evaporation is insufficient, spinning may be carried out under reduced-pressure conditions. Also, the temperature of the spinning environment varies with the solvent used, and is dependent on evaporation of the solvent and the viscosity of the polymer solution. Spinning is generally carried out at between 0 and 50°C. However, when a solvent having a low volatility is used, the temperature may exceed 50°C, provided that it is in a range that does not adversely affect the spinning apparatus or the function of the layered structure of fiber thereby obtained. A relative humidity of from 0 to 50 % is suitable, although the humidity may be suitably varied depending on the polymer concentration and the type of solvent. To this end, the polymer solution-feeding syringe or tank may be provided with a temperature regulating mechanism or a humidity regulating mechanism.

The inventive fiber may be used alone or, to accommodate handleability and other requirements, may be used in combination with other members. For example, by using a supporting base such as nonwoven fabric, woven fabric or film as the collector and depositing the inventive fiber thereon, it is also possible to produce a composite material in which the supporting base and the layered structure of fiber of the invention are combined.

The fiber or layered structure of fiber of the invention may be used in filters, garments, biocompatible materials and various other types of applications.

Examples of such filter applications include HEPA, ULPA and other air filters serving as structural components, gas permeable membranes, gas separator membranes, battery separators that need to be microporous, and polyelectrolyte membranes for fuel cells.

In the case of garment applications, use as a neck warmer or as a face mask or other protective apparel that directly covers the mouth and nose is possible, and can prevent stuffiness and discomfort from exhaled air. Additional garment applications include sportswear that rapidly releases perspiration and, on account of the heat-retaining properties owing to the low thermal conductivity, mountaineering wear as well as lining fabric in inner and outer wear for winter use.

Examples of biocompatible material applications include medical tubing such as catheters and vascular prostheses, adhesive bandages and the like for treating scratches and abrasions, gauze, and media for regenerative medical engineering.

Other applications include abrasive pads for glass, metallic silicon and the like, cosmetic accessories such as puffs, cleaning cloths used to remove stains and dirt, and synthetic leather surface material. Another application is as sheet materials which, owing to the use of water-soluble nanofibers, can encapsulate and gradually release food additives and the like.

## EXAMPLES

The invention is illustrated more fully below by way of Working Examples and Comparative Examples, although the invention is not limited by these Examples. In the Working and Comparative Examples, unless noted otherwise, all references to "parts" and "%" are by weight. Tests and evaluations in the Working and Comparative Examples were carried out by the methods described below.

In the following Examples, the number-average molecular weight (Mn) is a polymethyl methacrylate (PMMA)-equivalent value measured by gel permeation chromatography (GPC). GPC measurements were carried out with an HLC-8320 GPC system (Tosoh Corporation), tetrahydrofuran (THF) as the solvent, and at a resin concentration of 0.1 %.

<Synthesis of Silicone-Modified Polyurethane Resin>

(Synthesis Example 1: Synthesis of SiPU1)

A reactor equipped with a stirrer, a reflux condenser, a thermometer and a nitrogen inlet and having also an open neck was furnished for use. While purging the reactor interior with nitrogen gas, the reactor was charged with 200 g of polytetramethylene glycol (available from BASF Japan Ltd. under the trade name "Poly THF 1000"; number-average molecular weight, 1,000; hydroxyl number, 113 mgKOH/g), 38 g of 1,4-butanediol, 0.5 g of a diterminated silicone diol (in Compound (2-1), n = 10), and 591.8 g of dimethylformamide (DMF). Stirring under applied heat was begun and, after the interior of the system had become uniform, 156.0 g of 4,4'-methylenebis(phenylene isocyanate) (MDI) was added at 50°C, following which the temperature was raised to 80°C, thereby effecting the reaction. The reaction was made to proceed until the absorption at 2,270 $cm^{-1}$ attributable to free isocyanate groups, as measured by infrared absorption spectroscopy, disappeared. Next, 52.6 g of DMF and 276.2 g of methyl ethyl ketone (MEK) were added, thereby giving the silicone polyurethane resin SiPU1 having a silicone content of 0.13 %, a number-average molecular weight (Mn) of 78,000 and a solids content of 30 %. The results are shown in Table 1.

(Synthesis Example 2: Synthesis of SiPU2)

A reactor equipped with a stirrer, a reflux condenser, a thermometer and a nitrogen inlet and having also an open neck was furnished for use. While purging the reactor interior with nitrogen gas, the reactor was charged with 200 g of polytetramethylene glycol (available from BASF Japan Ltd. under the trade name "Poly THF 1000"; number-average molecular weight, 1,000; hydroxyl number, 113 mgKOH/g), 38 g of 1,4-butanediol, 5 g of a diterminated silicone diol (in Compound (2-1), n = 10), and 599.4 g of dimethylformamide (DMF). Stirring under applied heat was begun and, after the interior of the system had become uniform, 156.6 g of 4,4'-methylenebis(phenylene isocyanate) (MDI) was added at 50°C, following which the temperature was raised to 80°C, thereby effecting the reaction. The reaction was made to proceed until the absorption at 2,270 $cm^{-1}$ attributable to free isocyanate groups, as measured by infrared absorption spectroscopy, disappeared. Next, 53.3 g of DMF and 279.7 g of methyl ethyl ketone (MEK) were added, thereby giving the silicone polyurethane resin SiPU2 having a silicone content of 1.3 %, a number-average molecular weight (Mn) of 81,000 and a solids content of 30 %. The results are shown in Table 1.

(Synthesis Example 3: Synthesis of SiPU3)

A reactor equipped with a stirrer, a reflux condenser, a thermometer and a nitrogen inlet and having also an open neck was furnished for use. While purging the reactor interior with nitrogen gas, the reactor was charged with 200 g of polytetramethylene glycol (available from BASF Japan Ltd. under the trade name "Poly THF 1000"; number-average molecular weight, 1,000; hydroxyl number, 113 mgKOH/g), 38 g of 1,4-butanediol, 45 g of a diterminated silicone diol (in Compound (2-1), n = 10), and 667.7 g of dimethylformamide (DMF). Stirring under applied heat was begun and, after the interior of the system had become uniform, 162.1 g of 4,4'-methylenebis(phenylene isocyanate) (MDI) was added at 50°C, following which the temperature was raised to 80°C, thereby effecting the reaction. The reaction was made to proceed until the absorption at 2,270 $cm^{-1}$ attributable to free isocyanate groups, as measured by infrared absorption spectroscopy, disappeared. Next, 60.3 g of DMF and 311.6 g of methyl ethyl ketone (MEK) were added, thereby giving the silicone polyurethane resin SiPU3 having a silicone content of 10.1 %, a number-average molecular weight (Mn) of 87,000 and a solids content of 30 %. The results are shown in Table 1.

(Synthesis Example 4: Synthesis of SiPU4)

A reactor equipped with a stirrer, a reflux condenser, a thermometer and a nitrogen inlet and having also an open neck was furnished for use. While purging the reactor interior with nitrogen gas, the reactor was charged with 20 g of polytetramethylene glycol (available from BASF Japan Ltd. under the trade name "Poly THF 1000"; number-average molecular weight, 1,000; hydroxyl number, 113 mgKOH/g), 38 g of 1,4-butanediol, 180 g of a diterminated silicone diol (in Compound (2-1), n = 10), and 552.8 g of dimethylformamide (DMF). Stirring under applied heat was begun and, after the interior of the system had become uniform, 130.5 g of 4,4'-methylenebis(phenylene isocyanate) (MDI) was added at 50°C, following which the temperature was raised to 80°C, thereby effecting the reaction. The reaction was made to proceed until the absorption at 2,270 $cm^{-1}$ attributable to free isocyanate groups, as measured by infrared absorption spectroscopy, disappeared. Next, 49.1 g of DMF and 258.0 g of methyl ethyl ketone (MEK) were added, thereby giving the silicone polyurethane resin SiPU4 having a silicone content of 48.8 %, a number-average molecular weight (Mn) of 74,000 and a solids content of 30 %. The results are shown in Table 1.

(Synthesis Example 5: Synthesis of SiPU5)

A reactor equipped with a stirrer, a reflux condenser, a thermometer and a nitrogen inlet and having also an open neck was furnished for use. While purging the reactor interior with nitrogen gas, the reactor was charged with 200 g of polytetramethylene glycol (available from BASF Japan Ltd. under the trade name "Poly THF 1000"; number-average molecular weight, 1,000; hydroxyl number, 113 mgKOH/g), 38 g of 1,4-butanediol, 45 g of a diterminated silicone diol (in Compound (2-1), n = 20), and 676.5 g of dimethylformamide (DMF). Stirring under applied heat was begun and, after the interior of the system had become uniform, 168.0 g of 4,4'-methylenebis(phenylene isocyanate) (MDI) was added at 50°C, following which the temperature was raised to 80°C, thereby effecting the reaction. The reaction was made to proceed until the absorption at 2,270 $cm^{-1}$ attributable to free isocyanate groups, as measured by infrared absorption spectroscopy, disappeared. Next, 60.1 g of DMF and 315.7 g of methyl ethyl ketone (MEK) were added, thereby giving the silicone polyurethane resin SiPU5 having a silicone content of 10.0 %, a number-average molecular weight (Mn) of 73,000 and a solids content of 30 %. The results are shown in Table 1.

(Synthesis Example 6: Synthesis of SiPU6)

A reactor equipped with a stirrer, a reflux condenser, a thermometer and a nitrogen inlet and having also an open neck was furnished for use. While purging the reactor interior with nitrogen gas, the reactor was charged with 150 g of polytetramethylene glycol (available from BASF Japan Ltd. under the trade name "Poly THF 1000"; number-average molecular weight, 1,000; hydroxyl number, 113 mgKOH/g), 38 g of 1,4-butanediol, 50 g of a diterminated silicone diol (in Compound (2-1), n = 10), and 187.8 g of dimethylformamide (DMF). Stirring under applied heat was begun and, after the interior of the system had become uniform, 200.1 g of isophorone diisocyanate (IPDI) was added at 50°C (ratio between isocyanate and hydroxyl groups, 1.5), following which the temperature was raised to 100°C, thereby effecting the reaction. The reaction was made to proceed until the NCO% reached a given value (4.03 %), following which 953.7 g of DMF was added and the temperature was set to 40°C. To this was added 51.1 g of isophorone diamine (IPDA), and the reaction was made to proceed until the absorption at 2,270 $cm^{-1}$ attributable to free isocyanate groups, as measured by infrared absorption spectroscopy, disappeared, thereby giving the silicone polyurethane resin SiPU6 having a silicone content of 10.2 %, a number-average molecular weight (Mn) of 83,000 and a solids content of 30 %. The results are shown in Table 1.

(Synthesis Example 7: Synthesis of SiPU7)

A reactor equipped with a stirrer, a reflux condenser, a thermometer and a nitrogen inlet and having also an open neck was furnished for use. While purging the reactor interior with nitrogen gas, the reactor was charged with 150 g of polytetramethylene glycol (available from BASF Japan Ltd. under the trade name "Poly THF 1000"; number-average molecular weight, 1,000; hydroxyl number, 113 mgKOH/g), 38 g of 1,4-butanediol, and 162.4 g of dimethylformamide (DMF). Stirring under applied heat was begun and, after the interior of the system had become uniform, 190.0 g of isophorone diisocyanate (IPDI) was added at 50°C (ratio between isocyanate and hydroxyl groups, 1.5), following which the temperature was raised to 100°C, thereby effecting the reaction. The reaction was made to proceed until the NCO% reached a given value (4.45 %), following which 872.4 g of DMF was added and the temperature was set to 40°C. To this was added first 45 g of a diterminated silicone diamine (in Compound (3-1), n = 10) and then 19.6 g of isophoronediamine (IPDA), and the reaction was made to proceed until the absorption at 2,270 $cm^{-1}$ attributable to free isocyanate groups, as measured by infrared absorption spectroscopy, disappeared, thereby giving the silicone polyurethane resin SiPU7 having a silicone content of 10.1 %, a number-average molecular weight (Mn) of 79,000 and a solids content of 30 %. The results are shown in Table 1.

(Synthesis Example 8: Synthesis of SiPU8)

A reactor equipped with a stirrer, a reflux condenser, a thermometer and a nitrogen inlet and having also an open neck was furnished for use. While purging the reactor interior with nitrogen gas, the reactor was charged with 200 g of polytetramethylene glycol (available from BASF Japan Ltd. under the trade name "Poly THF 1000"; number-average molecular weight, 1,000; hydroxyl number, 113 mgKOH/g), 38 g of 1,4-butanediol, 45 g of a diterminated silicone diamine (in Compound (2-1), n = 40), and 636.6 g of dimethylformamide (DMF). Stirring under applied heat was begun and, after the interior of the system had become uniform, 159.4 g of 4,4'-methylenebis(phenylene isocyanate) (MDI) was added at 50°C, following which the temperature was raised to 80°C, thereby effecting the reaction. The reaction was made to proceed until the absorption at 2,270 $cm^{-1}$ attributable to free isocyanate groups, as measured by infrared absorption spectroscopy, disappeared. Next, 59.0 g of DMF and 309.7 g of methyl ethyl ketone (MEK) were added, thereby giving the silicone polyurethane resin SiPU8 having a silicone content of 10.2 %, a number-average molecular weight (Mn) of 79,000 and a solids content of 30 %. The results are shown in Table 1.

(Synthesis Example 9: Synthesis of SiPU9)

A reactor equipped with a stirrer, a reflux condenser, a thermometer and a nitrogen inlet and having also an open neck was furnished for use. While purging the reactor interior with nitrogen gas, the reactor was charged with 200 g of polytetramethylene glycol (available from BASF Japan Ltd. under the trade name "Poly THF 1000"; number-average molecular weight, 1,000; hydroxyl number, 113 mgKOH/g), 38 g of 1,4-butanediol, 45 g of a diterminated silicone diamine (in Compound (2-1), n = 50), and 661.7 g of dimethylformamide (DMF). Stirring under applied heat was begun and, after the interior of the system had become uniform, 158.1 g of 4,4'-methylenebis(phenylene isocyanate) (MDI) was added at 50°C, following which the temperature was raised to 80°C, thereby effecting the reaction. The reaction was made to proceed until the absorption at 2,270 $cm^{-1}$ attributable to free isocyanate groups, as measured by infrared absorption spectroscopy, disappeared. Next, 58.8 g of DMF and 308.8 g of methyl ethyl ketone (MEK) were added, thereby giving the silicone polyurethane resin SiPU9 having a silicone content of 10.2 %, a number-average molecular weight (Mn) of 75,000 and a solids content of 30 %. The results are shown in Table 1.

<Synthesis of Silicone-Free Polyurethane Resin>

(Comparative Synthesis Example 1: Synthesis of PU1)

A reactor equipped with a stirrer, a reflux condenser, a thermometer and a nitrogen inlet and having also an open neck was furnished for use. While purging the reactor interior with nitrogen gas, the reactor was charged with 200 g of polytetramethylene glycol (available from BASF Japan Ltd. under the trade name "Poly THF 1000"; number-average molecular weight, 1,000; hydroxyl number, 113 mgKOH/g), 38 g of 1,4-butanediol, and 590.9 g of dimethylformamide (DMF). Stirring under applied heat was begun and, after the interior of the system had become uniform, 155.9 g of 4,4'-methylenebis(phenylene isocyanate) (MDI) was added at 50°C, following which the temperature was raised to 80°C, thereby effecting the reaction. The reaction was made to proceed until the absorption at 2,270 $cm^{-1}$ attributable to free isocyanate groups, as measured by infrared absorption spectroscopy, disappeared. Next, 52.5 g of DMF and 275.7 g of methyl ethyl ketone (MEK) were added, thereby giving the silicone polyurethane resin PU1 having a silicone content of 0 %, a number-average molecular weight (Mn) of 75,000 and a solids content of 30 %. The results are shown in Table 1.

[Table 1]

| Composition (g) | Synthesis Example 1 | Synthesis Example 2 | Synthesis Example 3 | Synthesis Example 4 | Synthesis Example 5 | Synthesis Example 6 | Synthesis Example 7 | Synthesis Example 8 | Synthesis Example 9 | Comparative Synthesis Example 1 |
|---|---|---|---|---|---|---|---|---|---|---|
| | SiPU1 | SiPU2 | SiPU3 | SiPU4 | SiPUS | SiPU6 | SiPU7 | SiPU8 | SiPU9 | PUI |
| Poly THF 1000 | 200 | 200 | 200 | 20 | 200 | 150 | 150 | 200 | 200 | 200 |
| Compound (2-1), n=10 | 0.5 | 5.0 | 45 | 180 | - | 50 | - | - | - | - |
| Compound (2-1), n=20 | - | - | - | - | 45 | - | - | - | - | - |
| Compound (2-1), n=40 | - | - | - | | - | - - | - | 45 | - | - |
| Compound (2-1), n=50 | - | - | - | - | - | - | - | - | 45 | - |
| 1,4-Butanediol | 38 | 38 | 38 | 38 | 38 | 38 | 38 | 38 | 38 | 38 |
| MDI | 156.0 | 156.6 | 162.1 | 130.5 | 168.0 | - | - | 159.4 | 158.1 | 155.9 |
| IPDI | - | - | - | - | - | 200.1 | 190.9 | - | - | - |
| IPDA | - | - | - | - | - | 51.1 | 19.6 | - | - | - |
| Compound (3-1), n=10 | - | - | - | - | - | - | 45 | - | - | - |
| DMF | 644.4 | 652.7 | 728 | 601.9 | 736.6 | 1,141.5 | 1,034.8 | 722.6 | 720.5 | 643.4 |
| MEK | 276.2 | 279.7 | 311.6 | 258.0 | 315.7 | - | - | 309.7 | 308.8 | 275.7 |
| Solidscontent (%) | 30 | 30 | 30 | 30 | 30 | 30 | 30 | 30 | 30 | 30 |
| Number-average molecular weight (Mn) | 78,000 | 81,000 | 87,000 | 74,000 | 73,000 | 83,000 | 79,000 | 79.000 | 75,000 | 75,000 |
| Si content (%) | 0.13 | 1.3 | 10.1 | 48.8 | 10.0 | 10.2 | 10.1 | 10.2 | 10.2 | 0 |

Using the electrospinning apparatus shown in FIG. 1 (NEU Nanofiber Electrospinning Unit, from Kato Tech Co., Ltd.), fiber formation was carried out for the silicone-modified polyurethane resins in above Synthesis Examples 3 and 5 and the silicone-free polyurethane resin obtained in Comparative Synthesis Example 1.

<Average Fiber Diameter>

The surfaces of the nonwoven fabrics made of the fibers obtained in the Working Examples and the Comparative Example were photographed using a JSM-6010LA scanning electron microscope (magnification, 2,000×) from JEOL Ltd., the diameters of 20 random fibers (n = 20) in the photograph were measured, and the average value was treated as the average fiber diameter.

(Working Example 1: Fiberization of SiPU3)

The silicone-modified polyurethane resin obtained in Synthesis Example 3 (3.0 g) was dissolved in a mixed solvent consisting of 7.7 g of N,N-dimethylformamide and 4.3 g of methyl ethyl ketone. This solution was stirred for 24 hours at 22°C, giving a uniform, milky-white solution. Using the electrospinning apparatus shown in FIG. 1 (NEU Nanofiber Electrospinning Unit, from Kato Tech Co., Ltd.), the polymer solution was discharged for 10 hours onto a fibrous structure collector 4. The ambient temperature was 22°C, the ambient humidity was 50 % RH, the inside diameter of the nozzle 1 was 0.6 mm, the applied voltage was 20 kV, and the distance from the nozzle 1 to the fibrous structure collector 4 was 10 cm. The average fiber diameter of the resulting nonwoven fabric was 0.64 μm; no fibers having a diameter of 1 μm or more were observed. FIG. 2 shows a scanning electron micrograph of the surface of the resulting nonwoven fabric.

(Working Example 2: Fiberization of SiPU3)

Aside from changing the applied voltage to 15 kV, fiber formation was carried out under the same conditions as in Working Example 1. The average fiber diameter of the resulting nonwoven fabric was 1.03 μm.

(Working Example 3: Fiberization of SiPU5)

Aside from changing the silicone-modified polyurethane resin obtained in Synthesis Example 3 to the silicone-modified polyurethane resin obtained in Synthesis Example 5, fiber formation was carried out under the same conditions as in Working Example 1. The average fiber diameter of the resulting nonwoven fabric was 0.76 μm; no fibers having a diameter of 1 μm or more were observed. FIG. 3 shows a scanning electron micrograph of the surface of the resulting nonwoven fabric made of nanofibers.

(Working Example 4: Fiberization of SiPU5)

Aside from changing the applied voltage to 15 kV, fiber formation was carried out under the same conditions as in Working Example 3. The average fiber diameter of the resulting nonwoven fabric was 0.63 μm. No fibers having a diameter of 1 μm or more were observed.

(Working Example 5: Fiberization of SiPU5)

Aside from changing the applied voltage to 10 kV, fiber formation was carried out under the same conditions as in Working Example 3. The average fiber diameter of the resulting nonwoven fabric was 0.62 μm. No fibers having a diameter of 1 μm or more were observed.

(Working Example 6: Fiberization of SiPU8)

Aside from changing the silicone-modified polyurethane resin obtained in Synthesis Example 3 to the silicone-modified polyurethane resin obtained in Synthesis Example 8 and changing the applied voltage to 15 kV, fiber formation was carried out under the same conditions as in Working Example 1. The average fiber diameter of the resulting nonwoven fabric was 0.52 μm; no fibers having a diameter of 1 μm or more were observed. FIG. 4 shows a scanning electron micrograph of the surface of the resulting nonwoven fabric.

(Working Example 7: Fiberization of SiPU9)

Aside from changing the silicone-modified polyurethane resin obtained in Synthesis Example 3 to the silicone-modified polyurethane resin obtained in Synthesis Example 9 and changing the applied voltage to 13 kV, fiber formation was carried out under the same conditions as in Working Example 1. The average fiber diameter of the resulting nonwoven fabric was 0.44 μm. No fibers having a diameter of 1 μm or more were observed. FIG. 5 shows a scanning electron micrograph of the surface of the resulting nonwoven fabric.

<Fiberization of Silicone-Free Polyurethane Resin>

(Comparative Example 1: Fiberization of PU1)

The silicone-free polyurethane resin obtained in Comparative Synthesis Example 1 (3.0 g) was dissolved in a mixed solvent consisting of 10.9 g of N,N-dimethylformamide and 6.1 g of methyl ethyl ketone. This solution was stirred for 24 hours at 22°C, giving a uniform, milky-white solution. Using the apparatus shown in FIG. 1, the polymer solution was discharged for 10 hours onto a fibrous structure collector 4. The inside diameter of the nozzle 1 was 0.6 mm, the applied voltage was 15 kV, and the distance from the nozzle 1 to the fibrous structure collector 4 was 10 cm. The average fiber diameter of the resulting nonwoven fabric was 0.72 μm. No fibers having a diameter of 1 μm or more were observed. FIG. 6 shows a scanning electron micrograph of the surface of the nonwoven fabric.

The nonwoven fabrics obtained in Working Examples 1, 3, 6 and 7 and Comparative Example 1 were subjected to evaluations of thickness, elongation at break, elastic modulus, dynamic coefficient of friction, anti-blocking properties, thermal conductivity, water vapor permeability, water contact angle, moisture content, oxygen permeability and spinnability. Those results are shown in Table 2.

<Elongation at Break>

Test specimens having a width of 5 mm and a length of 10 mm were prepared from each nonwoven fabric, and measurement was carried out using a small desktop testing machine (EZTest/EZ-S, from Shimadzu Corporation) at a tensile test rate of 10 mm/min. The elongation at break was determined from the stress-strain curve.

<Modulus of Elasticity>

Test specimens having a width of 5 mm and a length of 10 mm were prepared from each nonwoven fabric, and measurement was carried out using a small desktop testing machine (EZTest/EZ-S, from Shimadzu Corporation) at a tensile test rate of 10 mm/min. The modulus of elasticity was determined from the stress-strain curve.

<Dynamic Coefficient of Friction>

Using a horizontal tensile testing machine (AGS-X, from Shimadzu Corporation), the dynamic coefficient of friction was determined under a load of 200 g and at a rate of travel of 0.3 m/min.

Condition A: Dynamic coefficient of friction between nonwoven fabric base and woodfree paper

Condition B: Dynamic coefficient of friction between nonwoven fabric base and synthetic leather (Supplale®, from Idemitsu Technofine Co., Ltd.)

<Anti-Blocking Properties>

Pieces of the same type of nonwoven fabric were placed over one another and left to stand for 24 hours at 36°C and 50 % RH, following which the pieces of fabric were caused to slide against each other.

O: The pieces of fabric do not stick to each other and have good slip properties

Δ: The pieces of fabric do not stick to each other and have moderate slip properties

X: The pieces of fabric do not stick to each other and have poor slip properties

<Thermal Conductivity>

The thermal conductivity was measured using the KES-F7 Thermo Labo IIB precise and fast thermal property-measuring instrument (Kato Tech Co., Ltd.).

<Water Vapor Permeability>

Measurement was carried out using the L80-5000 Water Vapor Permeation Analyzer (Systech Instruments) at 40°C (JIS K7129A).

<Water Contact Angle>

The static contact angle of pure water was measured with the DM-501 Hi automated contact angle meter (Kyowa Interface Science Co., Ltd.).

<Moisture Content>

Each nonwoven fabric was immersed in water for 24 hours, and then dried for 24 hours at 60°C (JIS L1096).

$$\text{Moisture content (\%)} = [(\text{weight (g) before drying} - \text{weight (g) after drying}) / \text{weight (g) after drying}] \times 100$$

<Oxygen Permeability>

Measurement was carried out at 40°C using the K-315-N gas permeability analyzer (Toyo Rika Co., Ltd.).

<Spinnability>

The fiber diameter was examined under a scanning electron microscope and evaluated as follows.

O: Fiber diameter is uniform

X: Fiber diameter is non-uniform

[Table 2]

| Measured property | Working Example 1 | Working Example 3 | Working Example 6 | Working Example 7 | Comparative Example 1 |
|---|---|---|---|---|---|
| Nonwoven fabric thickness (μm) | 125 | 119 | 93 | 72 | 117 |
| Elongation at break (%) | 291 | 229 | 127 | 112 | 166 |
| Modulus of elasticity (MPa) | 2.4 | 2.4 | 5.2 | 6.4 | 4.9 |
| Dynamic coefficient of friction: Condition A | 0.65 | 0.95 | 0.55 | 0.80 | 1.20 |
| Dynamic coefficient of friction: Condition B | 1.28 | 1.90* | 1.14 | 1.25 | 1.88’ |
| Anti-blocking properties | O | Δ | Δ | Δ | X |
| Thermal conductivity (W/mK) | 0.011 | 0.014 | 0.014 | 0.014 | 0.012 |
| Water vapor permeability ($mL/m^2 \cdot day$) | 1,000< | 1,000< | 1,000< | 1,000< | 1,000< |
| Water contact angle (°) | 133 | 130 | 131 | 131 | 117 |

(continued)

| Measured property | Working Example 1 | Working Example 3 | Working Example 6 | Working Example 7 | Comparative Example 1 |
|---|---|---|---|---|---|
| Moisture content (%) | 116 | 118 | 83 | 71 | 292 |
| Oxygen permeability (mL/m$^2$·day) | 1,000< | 1,000< | 1,000< | 1,000< | 1,000< |
| Spinnability | O | O | O | O | X |
| *Due to occurrence of stick-slip phenomenon, the reference value is given here. | | | | | |

## INDUSTRIAL APPLICABILITY

This invention is able to provide a fiber having the excellent characteristics with excellent flexibility, slip properties, anti-blocking properties, heat-retaining properties, water vapor permeability, water repellency and spinnability. The fiber of the invention can contribute to various fields, including the fields of apparel, filters and medical care.

## REFERENCE SIGNS LIST

1 Nozzle
2 Polymer solution
3 Syringe (polymer solution tank)
4 Collector
5 High-voltage generator

## Claims

**1.** A fiber formed from a resin which contains a silicone-modified polyurethane resin, being a silicone-modified polyurethane resin obtainable as a reaction product of

(A) a polyol,
(B) a chain extender,
(C) an active hydrogen group-containing organopolysiloxane of general formula (1):

$$R^1SiR^2R^3O(SiR^2R^3O)_nSiR^2R^3R^1 \quad (1),$$

wherein

each $R^1$ independently is a monovalent hydrocarbon group of 1 to 10 carbon atoms which has a hydroxyl group or a mercapto group, and may have an oxygen atom in the chain, or a monovalent hydrocarbon group of 1 to 10 carbon atoms which has a primary amino group or a secondary amino group;
$R^2$ and $R^3$ are each independently a group selected from linear, branched or cyclic alkyl and aralkyl groups of 1 to 10 carbon atoms in which some portion of the hydrogen atoms may be substituted with fluorine atoms, aryl groups of 5 to 12 carbon atoms which may have a substituent, and vinyl groups; and n is an integer from 1 to 200, and

(D) a polyisocyanate; the amount of the active hydrogen group-containing organopolysiloxane (C) being from 0.1 to 50 parts by weight per 100 parts by weight of components (A) to (D) combined;

the fiber having an average diameter of at least 100 nm and less than 1,000 nm, as measured by the method disclosed in the description.

**2.** The fiber of claim 1 wherein in formula (1) groups $R^1$ are

monovalent hydrocarbon groups of 2 to 6 carbon atoms which have a primary hydroxyl group or a secondary hydroxyl group and may have an oxygen atom in the chain, or
monovalent hydrocarbon groups of 2 to 6 carbon atoms which have a primary amino group or a secondary amino group.

**3.** The fiber of claim 1 or 2 wherein in formula (1) groups $R^2$ and $R^3$ are selected from methyl, phenyl, 3,3,3-trifluoropropyl and vinyl groups.

**4.** The fiber of any one of the preceding claims wherein the amount of chain extender (B) is from 1 to 200 parts by weight per 100 parts by weight of the polyol (A) and/or the amount of polyisocyanate (D) is such that the equivalent weight ratio of isocyanate groups with respect to active hydrogen groups from components (A) to (C) is in the range 0.9 to 1.1.

**5.** The fiber of any one of the preceding claims wherein the silicone-modified polyurethane resin is a reaction product of a polyamine (E) in addition to said components (A) to (D), the amount of polyamine (E) being from 1 to 30 parts by weight per 100 parts by weight of the combined amount of components (A) to (D).

**6.** The fiber of any one of the preceding claims wherein the silicone-modified polyurethane resin has a number-average molecular weight of from 10,000 to 200,000, the number-average molecular weight being a polymethyl methacrylate equivalent value obtained by gel permeation chromatography.

**7.** The fiber of claim 6 wherein said number-average molecular weight is from 40,000 to 120,000.

**8.** The fiber of any one of the preceding claims formed from a said resin which

is formed solely of the silicone-modified polyurethane resin, or
contains additionally, in an amount of from 0 to 20 wt%, one or more other resins selected from vinyl resins, acrylic resins, methacrylic resins, epoxy resins, urethane resins, olefin resins and silicone resins.

**9.** A layered fibrous structure comprising fibers of any one of claims 1 to 8.

**10.** Layered fibrous structure of claim 9 taking the form of a nonwoven fabric, tubing, or mesh.

**11.** A method for producing a fiber of any one of claims 1 to 8 comprising the step of spinning a solution or dispersion of the silicone-modified polyurethane-containing resin.

**12.** Method of claim 11 wherein the spinning is by an electrospinning process.

**13.** Method of claim 11 or 12 wherein for the electrospinning the applied voltage is from 3 to 100 kV, the nozzle diameter is from 0.05 to 2 mm and the feed rate of the polymer solution is from 0.01 to 0.1 mL/min per nozzle.

**14.** The fiber production method of claim 11, 12 or 13 wherein the silicone-modified polyurethane resin-containing resin is fed to the spinning step in the state of a solution or dispersion in an organic solvent, water or a mixture thereof.

**15.** Method of any one of claims 11 to 14 wherein the viscosity of the solution or dispersion of the silicone-modified polyurethane resin-containing resin is in the range of 1 to 1,500 dPa·s, as measured at 25°C with a rotational viscometer.

## Patentansprüche

**1.** Faser, die aus einem Harz gebildet ist, das ein Silikon-modifiziertes Polyurethanharz enthält, wobei es sich um ein Silikon-modifiziertes Polyurethanharz handelt, das als Reaktionsprodukt der folgenden erhältlich ist:

(A) eines Polyols,
(B) eines Kettenverlängerers,
(C) eines aktive Wasserstoffgruppen enthaltenden Organopolysiloxans der allgemeinen Formel (1):

$$R^1SiR^2R^3O(SiR^2R^3O)_nSiR^2R^3R^1 \quad (1),$$

worin

die $R^1$ jeweils unabhängig eine einwertige Kohlenwasserstoffgruppe mit 1 bis 10 Kohlenstoffatomen, die eine Hydroxylgruppe oder eine Mercaptogruppe und gegebenenfalls ein Sauerstoffatom in der Kette aufweist, oder eine einwertige Kohlenwasserstoffgruppe mit 1 bis 10 Kohlenstoffatomen, die eine primäre Aminogruppe oder eine sekundäre Aminogruppe aufweist, sind;
$R^2$ und $R^3$ jeweils unabhängig voneinander eine Gruppe sind, die aus unverzweigten, verzweigten oder zyklischen Alkyl- und Aralkylgruppen mit 1 bis 10 Kohlenstoffatomen, worin gegebenenfalls ein Teil der Wasserstoffatome durch Fluoratome ersetzt ist, Arylgruppen mit 5 bis 12 Kohlenstoffatomen, die gegebenenfalls einen Substituenten aufweisen, und Vinylgruppen ausgewählt ist; und
n eine ganze Zahl von 1 bis 200 ist, und

(D) eines Polyisocyanats;

wobei die Menge des aktive Wasserstoffgruppen enthaltenden Organopolysiloxans (C) 0,1 bis 50 Gewichtsteile pro 100 Gewichtsteile der Komponenten (A) bis (D) zusammen beträgt;
wobei die Faser einen mittleren Durchmesser, gemessen nach dem in der Beschreibung offenbarten Verfahren, von zumindest 100 nm und weniger als 1.000 nm aufweist.

**2.** Faser nach Anspruch 1, wobei in Formel (1) die Gruppen $R^1$ die folgenden sind:

einwertige Kohlenwasserstoffgruppen mit 2 bis 6 Kohlenstoffatomen, die eine primäre Hydroxylgruppe oder eine sekundäre Hydroxylgruppe und gegebenenfalls ein Sauerstoffatom in der Kette aufweisen, oder
einwertige Kohlenwasserstoffgruppen mit 2 bis 6 Kohlenstoffatomen, die eine primäre Aminogruppe oder eine sekundäre Aminogruppen aufweisen.

**3.** Faser nach Anspruch 1 oder 2, wobei in Formel (1) die Gruppen $R^2$ und $R^3$ aus Methyl-, Phenyl-, 3,3,3-Trifluorpropyl- und Vinylgruppen ausgewählt sind.

**4.** Faser nach einem der vorangegangenen Ansprüche, wobei die Menge des Kettenverlängerers (B) 1 bis 200 Gewichtsteile pro 100 Gewichtsteile des Polyols (A) beträgt und/oder die Menge des Polyisocyanats (D) eine solche ist, dass das Äquivalentgewichtsverhältnis zwischen Isocyanatgruppen und aktiven Wasserstoffgruppen der Komponenten (A) bis (C) im Bereich von 0,9 bis 1,1 liegt.

**5.** Faser nach einem der vorangegangenen Ansprüche, wobei das Silikon-modifizierte Polyurethanharz ein Reaktionsprodukt eines Polyamins (E) zusätzlich zu den Komponenten (A) bis (D) ist, wobei die Menge des Polyamins (E) 1 bis 30 Gewichtsteile pro 100 Gewichtsteile der Komponenten (A) bis (D) zusammen beträgt.

**6.** Faser nach einem der vorangegangenen Ansprüche, wobei das Silikon-modifizierte Polyurethanharz ein zahlenmittleres Molekulargewicht von 10.000 bis 200.000 aufweist, wobei das zahlenmittlere Molekulargewicht ein mittels Gelpermeationschromatographie erhaltener Polymethylmethacrylat-Äquivalenzwert ist.

**7.** Faser nach Anspruch 6, wobei das zahlenmittlere Molekulargewicht 40.000 bis 120.000 beträgt.

**8.** Faser nach einem der vorangegangenen Ansprüche, die aus einem genannten Harz gebildet ist, das

nur aus dem Silikon-modifizierten Polyurethanharz besteht oder
zusätzlich eine Menge von 0 bis 20 Gew.-% eines oder mehrerer anderer Harze umfasst, die aus Vinylharzen, Acrylharzen, Methacrylharzen, Epoxidharzen, Urethanharzen, Olefinharzen und Silikonharzen ausgewählt sind.

**9.** Faserschichtstruktur, die Fasern nach einem der Ansprüche 1 bis 8 umfasst.

**10.** Faserschichtstruktur nach Anspruch 9, welche die Form eines Vliesstoffs, einer Röhre oder eines Netzes aufweist.

**11.** Verfahren zur Herstellung einer Faser nach einem der Ansprüche 1 bis 8, das den Schritt des Spinnens einer Lösung oder Dispersion des ein Silikon-modifiziertes Polyurethanharz enthaltenden Harzes umfasst.

**12.** Verfahren nach Anspruch 11, wobei das Spinnen durch einen Elektrospinnprozess erfolgt.

**13.** Verfahren nach Anspruch 11 oder 12, wobei beim Elektrospinnen die angelegte Spannung 3 bis 100 kV beträgt, der Düsendurchmesser 0,05 bis 2 mm beträgt und die Zufuhrrate der Polymerlösung 0,01 bis 0,1 ml/min pro Düse beträgt.

**14.** Faserherstellungsverfahren nach Anspruch 11, 12 oder 13, wobei das ein Silikon-modifiziertes Polyurethanharz enthaltende Harz dem Spinnschritt im Zustand einer Lösung oder Dispersion in einem organischen Lösungsmittel, in Wasser oder in einem Gemisch davon zugeführt wird.

**15.** Verfahren nach einem der Ansprüche 11 bis 14, wobei die bei 25 °C mit einem Rotationsviskosimeter gemessene Viskosität der Lösung oder Dispersion des ein Silikon-modifiziertes Polyurethanharz enthaltenden Harzes im Bereich von 1 bis 1.500 dPa·s liegt.

**Revendications**

**1.** Fibre formée à partir d'une résine qui contient une résine polyuréthane modifiée au silicone, qui est une résine polyuréthane modifiée au silicone pouvant être obtenue sous forme d'un produit de réaction de

(A) un polyol,
(B) une agent d'extension de chaîne,
(C) un organopolysiloxane contenant un groupe hydrogène actif de formule générale (1) :

$$R^1SiR^2R^3O(SiR^2R^3O)_nSiR^2R^3R^1 \qquad (1),$$

où

chaque $R^1$ est indépendamment un groupe hydrocarboné monovalent de 1 à 10 atomes de carbone qui a un groupe hydroxyle ou un groupe mercapto, et peut avoir un atome d'oxygène dans la chaîne, ou un groupe hydrocarboné monovalent de 1 à 10 atomes de carbone qui a un groupe amino primaire ou un groupe amino secondaire ;
$R^2$ et $R^3$ sont chacun indépendamment un groupe sélectionné parmi des groupes alkyle et aralkyle linéaires, ramifiés ou cycliques de 1 à 10 atomes de carbone dans lesquels une certaine partie des atomes d'hydrogène peut être remplacée par des atomes de fluor, des groupes aryle de 5 à 12 atomes de carbone qui peuvent avoir un substituant, et des groupes vinyle ; et n est un nombre entier compris entre 1 et 200, et

(D) un polyisocyanate ;

la quantité de l'organopolysiloxane contenant un groupe hydrogène actif (C) étant comprise entre 0,1 et 50 parties en poids pour 100 parties en poids des composants (A) à (D) combinés ;
la fibre ayant un diamètre moyen d'au moins 100 nm et de moins de 1 000 nm, tel que mesuré par le procédé divulgué dans la description.

**2.** Fibre selon la revendication 1, dans laquelle, dans la formule (1), les groupes $R^1$ sont

des groupes hydrocarbonés monovalents de 2 à 6 atomes de carbone qui ont un groupe hydroxyle primaire ou un groupe hydroxyle secondaire et peuvent avoir un atome d'oxygène dans la chaîne, ou
des groupes hydrocarbonés monovalents de 2 à 6 atomes de carbone qui ont un groupe amino primaire ou un groupe amino secondaire.

**3.** Fibre selon la revendication 1 ou 2, dans laquelle, dans la formule (1), les groupes $R^2$ et $R^3$ sont sélectionnés parmi des groupes méthyle, phényle, 3,3,3-trifluoropropyle et vinyle.

**4.** Fibre selon l'une quelconque des revendications précédentes, dans laquelle la quantité d'agent d'extension de chaîne (B) est comprise entre 1 et 200 parties en poids pour 100 parties en poids du polyol (A) et/ou la quantité de polyisocyanate (D) est telle que le rapport en poids équivalent des groupes isocyanate par rapport aux groupes hydrogène actifs provenant des composants (A) à (C) est compris entre 0,9 et 1,1.

**5.** Fibre selon l'une quelconque des revendications précédentes, dans laquelle la résine polyuréthane modifiée au silicone est un produit de réaction d'une polyamine (E) en plus desdits composants (A) à (D), la quantité de polyamine (E) étant comprise entre 1 et 30 parties en poids pour 100 parties en poids de la quantité combinée des composants (A) à (D).

**6.** Fibre selon l'une quelconque des revendications précédentes, dans laquelle la résine polyuréthane modifiée au silicone a un poids moléculaire moyen en nombre compris entre 10 000 et 200 000, le poids moléculaire moyen en nombre étant une valeur équivalente en polyméthacrylate de méthyle obtenue par chromatographie par perméation sur gel.

**7.** Fibre selon la revendication 6, dans laquelle ledit poids moléculaire moyen en nombre est compris entre 40 000 et 120 000.

**8.** Fibre selon l'une quelconque des revendications précédentes formée à partir de ladite résine qui

est formée uniquement de la résine polyuréthane modifiée au silicone, ou
contient de plus, selon une quantité de 0 à 20 % en poids, une ou plusieurs autres résines sélectionnées parmi des résines vinyliques, résines acryliques, résines méthacryliques, résines époxy, résines uréthane, résines oléfine et résines silicone.

**9.** Structure fibreuse stratifiée comprenant des fibres selon l'une quelconque des revendications 1 à 8.

**10.** Structure fibreuse stratifiée selon la revendication 9 prenant la forme d'un tissu non tissé, d'un tubage, ou d'un treillis.

**11.** Procédé de production d'une fibre selon l'une quelconque des revendications 1 à 8 comprenant l'étape de filage d'une solution ou dispersion de la résine contenant du polyuréthane modifiée au silicone.

**12.** Procédé selon la revendication 11 dans lequel le filage est effectué par un processus d'électro-filage.

**13.** Procédé selon la revendication 11 ou 12 dans lequel, pour l'électro-filage, la tension appliquée est de 3 à 100 kV, le diamètre de buse est de 0,05 à 2 mm et la vitesse d'alimentation de la solution polymère est de 0,01 à 0,1 mL/min par buse.

**14.** Procédé de production de fibre selon la revendication 11, 12 ou 13, dans lequel la résine contenant une résine polyuréthane modifiée au silicone est introduite dans l'étape de filage dans l'état d'une solution ou dispersion dans un solvant organique, de l'eau ou un mélange de ceux-ci.

**15.** Procédé selon l'une quelconque des revendications 11 à 14, dans lequel la viscosité de la solution ou dispersion de la résine contenant une résine polyuréthane modifiée au silicone est comprise entre 1 et 1 500 dPa.s, telle que mesurée à 25°C à l'aide d'un viscosimètre rotatif.

FIG.1

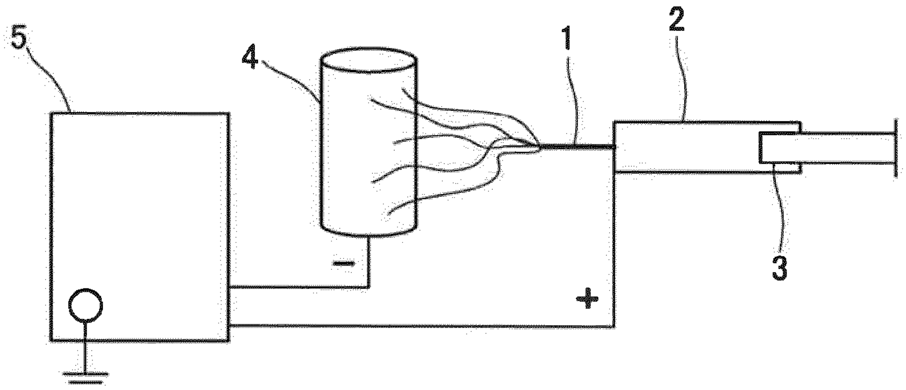


FIG.2

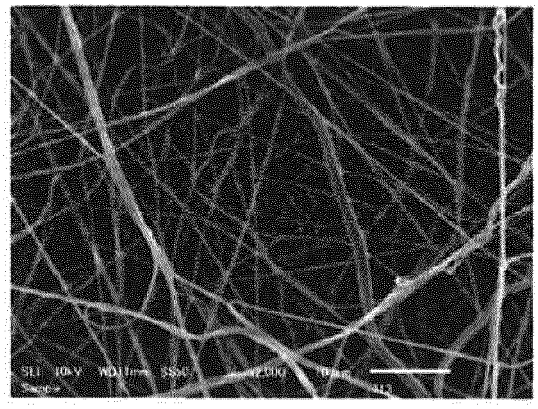

FIG.3

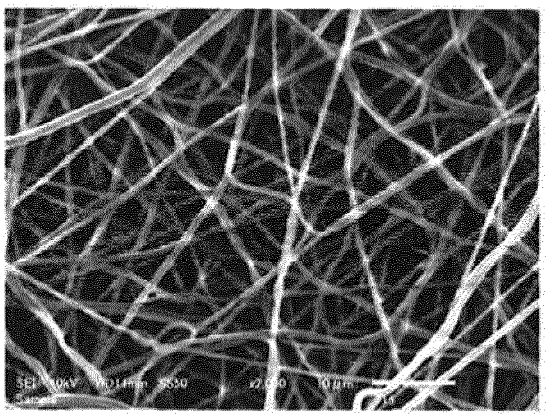

FIG.4

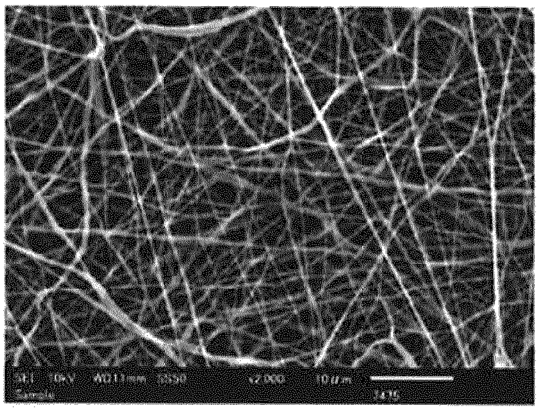

FIG.5

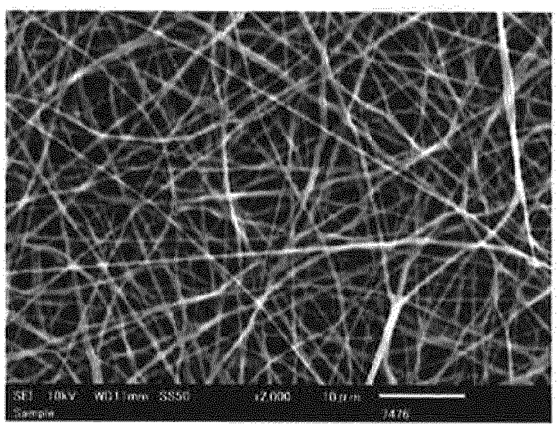

FIG.6

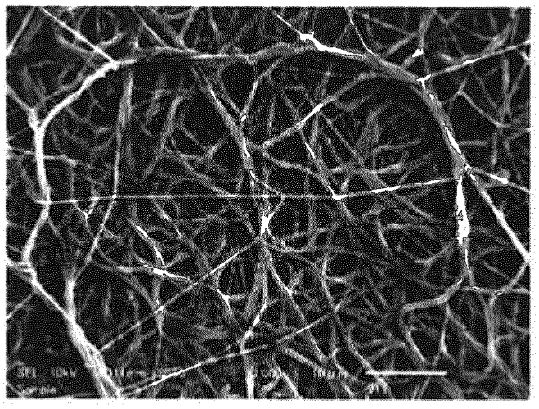

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2012277394 A
- JP 2011157451 A
- JP 201173936 B
- US 6637181 B
- JP 2001207334 A
- US 2003209835 A
- JP 2008223186 A
- JP 2010189771 A
- JP 2014111850 A
- US 4043331 A
- JP 2006501373 A
- JP 2011503387 A
- JP 2014025157 A
- JP 2010121221 A
- JP 2007303031 A
- JP 2014047440 A
- JP 2014177728 A